(19) Europäisches Patentamt European Patent Office Office européen des brevets

(11) **EP 3 444 301 B1**

(12) **EUROPEAN PATENT SPECIFICATION**

(45) Date of publication and mention of the grant of the patent:
**07.04.2021 Bulletin 2021/14**

(21) Application number: **17782349.9**

(22) Date of filing: **10.04.2017**

(51) Int Cl.:
*C08L 63/00* (2006.01)     *C08L 51/06* (2006.01)
*C09J 11/08* (2006.01)     *C09J 163/00* (2006.01)

(86) International application number:
**PCT/JP2017/014681**

(87) International publication number:
**WO 2017/179536 (19.10.2017 Gazette 2017/42)**

(54) **CURABLE COMPOSITION AND ADHESIVE**

HÄRTBARE ZUSAMMENSETZUNG UND KLEBSTOFF

COMPOSITION DURCISSABLE ET ADHÉSIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2016 JP 2016079836**

(43) Date of publication of application:
**20.02.2019 Bulletin 2019/08**

(73) Proprietor: **Kaneka Corporation Osaka-shi, Osaka 530-8288 (JP)**

(72) Inventor: **OKAMOTO, Toshihiko Takasago-shi Hyogo 676-8688 (JP)**

(74) Representative: **Vossius & Partner Patentanwälte Rechtsanwälte mbB Siebertstrasse 3 81675 München (DE)**

(56) References cited:
EP-A1- 1 632 533     EP-A2- 2 163 579
JP-A- H05 214 310     JP-A- H08 183 836
JP-A- 2010 059 388     JP-A- 2010 077 305
JP-A- 2010 090 371     US-A- 5 290 857

**EP 3 444 301 B1**

**Description**

TECHNICAL FIELD

The present invention relates to a curable composition containing as a main component an epoxy resin and having a low viscosity before curing and resulting in a rubber cured product excellent in mechanical strength after curing. Particularly, the present invention relates to an adhesive containing the curable composition.

BACKGROUND ART

Cured products of epoxy resins are excellent in many respects such as dimensional stability, mechanical strength, electrical insulation characteristics, heat resistance, water resistance, and chemical resistance. However, although the cured product of epoxy resin has high rigidity, it has low elongation properties and may exhibit very brittle properties. Such properties often become a problem in the use which requires high elongation.

In general, steel plates are used for structural members of vehicles, but in recent years, aluminum plates, FRP plates, and the like are being applied associated with the need for reduction in weight of vehicles. Therefore, there is a case where a plurality of members having different linear expansion coefficients is pasted and bonded to one another using a structural adhesive. However, as described in Patent Documents 1 to 3, in the case of using different members for a vehicle exterior panel, the panel is bonded with an adhesive having high rigidity and low elongation, whereby an internal stress is produced due to a difference in linear expansion coefficient between different substrates with temperature change, because the panel has a large area and low rigidity. This may cause problems such as distortion in the vehicle exterior panel and peeling of the bonded surface.

Patent Documents 4 and 5 disclose a technique of improving the toughness and impact resistance of cured products obtained by dispersing polymer fine particles in a curable resin composition containing a curable resin such as an epoxy resin as a main component. However, Patent Documents 4 and 5 do not teach a EP-B1-2163579 rubber elastic adhesive for structural use. discloses flexible epoxy adhesive compositions with improved performance at elevated temperatures.

PRIOR ART DOCUMENTS

PATENT DOCUMENT

Patent Document 1: Japanese unexamined patent application publication No. 2005-272647
Patent Document 2: Japanese unexamined patent application publication No. 2009-108278
Patent Document 3: Japanese unexamined patent application publication No. 2014-83904
Patent Document 4: WO2009/034966 Pamphlet
Patent Document 5: Japanese unexamined patent application publication No. 2014-141604

SUMMARY OF THE INVENTION

PROBLEMS TO BE SOLVED BY THE INVENTION

The object of the present invention is to provide a curable composition containing as a main component an epoxy resin and resulting in a cured product having rubber elasticity and excellent mechanical strength.

SOLUTIONS TO THE PROBLEMS

The present inventors have found to solve the problem by, in the curable composition containing an epoxy resin, polymer fine particles, and an epoxy curing agent, using as a main component of the epoxy resin a flexible epoxy resin (A) resulting in a cured product having rubber elasticity, and combining the flexible epoxy resin (A) with the polymer fine particles (B) having a core-shell structure in which a core layer has a glass transition temperature of more than 0 °C, to complete the present invention.

1) Specifically, the present invention relates a curable composition containing 100 parts by mass of a flexible epoxy resin (A) as defined in the present claims , 1 to 150 parts by mass of polymer fine particles (B) as defined in the present claims , and 1 to 200 parts by mass of an epoxy curing agent (C), wherein

2

the polymer fine particles have a core-shell structure and at least two layers of a core layer and a shell layer,
the core layer of the polymer fine particles (B) has a glass transition temperature of more than 0 °C as calculated by the following numerical formula (1),
a cured product obtained by curing the curable composition has a type A durometer hardness of 5 to 95 at 23 °C as measured by JIS K6253-3,

$$1/Tg = \Sigma(M_i/Tg_i) \qquad (1)$$

wherein $M_i$ represents a mass fraction of a monomer unit i selected from butadiene unit and a non-crosslinking monomer unit constituting the core layer of the polymer fine particles (B), and $Tg_i$ represents a glass transition temperature (K) of a homopolymer composed of the monomer unit i.

2) The core layer of the polymer fine particles (B) preferably has the glass transition temperature of from 15 to 150 °C.

3) The flexible epoxy resin (A) preferably has an epoxy equivalent of from 200 to 4000 g/eq.

4) The core layer of the polymer fine particles (B) preferably contains a (meth)acrylate polymer.

5) The core layer of the polymer fine particles (B) preferably contains a polymer polymerized with 80 to 99 % by mass of the non-crosslinking monomer and 1 to 20 % by mass of a crosslinking monomer.

6) The shell layer of the polymer fine particles (B) preferably contains a (meth)acrylate polymer.

7) The shell layer of the polymer fine particles (B) preferably has an epoxy group.

8) An amount of the epoxy group of the shell layer of the polymer fine particles (B) is preferably 0.05 to 3.5 mmol/g.

9) The polymer fine particles (B) preferably have the shell layer grafted on the core layer, and the shell layer preferably is polymerized with at least a monomer having an epoxy group.

10) The polymer fine particles (B) preferably are dispersed in a state of primary particles in the curable composition.

11) The present invention encompasses a cured product obtained by curing the curable composition as defined in any one of 1) to 10).

12) The present invention also encompasses an adhesive containing the curable composition as defined in any one of 1) to 10).

13) The present invention further encompasses an adhesive for vehicle containing the curable composition as defined in any one of 1) to 10).

14) The present invention encompasses a laminate containing bonded substrates, containing two substrates composed of different materials bonded with the curable composition as defined in any one of 1) to 10).

15) The laminate preferably is an exterior panel.

16) At least one of the two substrates preferably contains at least one selected from a steel plate, an aluminum alloy plate, a titanium alloy plate, a magnesium alloy plate, and a plastic substrate.

EFFECTS OF THE INVENTION

According to the curable composition of the present invention, the cured product formed from the curable composition exhibits excellent tensile strength in addition to rubber elasticity, and high elongation. Also, in the preferred embodiment, the curable composition of the present invention has a low viscosity and is excellent in handling.

MODES FOR CARRYING OUT THE INVENTION

The curable composition of the present invention is explained in detail as follows.

The curable composition of the present invention contains 100 parts by mass of a flexible epoxy resin (A) as defined in the present claims , 1 to 150 parts by mass of polymer fine particles (B) as defined in the present claims having a core-shell structure in which a core layer has a glass transition temperature of more than 0 °C, and 1 to 200 parts by mass of an epoxy curing agent (C). It is essential that the cured product obtained by curing the curable composition exhibits rubber elasticity. Concretely, the cured product essentially has type A durometer hardness as defined in JIS K6253-3 of 5 to 95, preferably 20 to 90, more preferably 40 to 87, and particularly preferably 50 to 85, at 23 °C. When the type A durometer of the cured product is less than 5, the cured product has insufficient tensile strength in some cases. On the other hand, when type A durometer of the cured product is more than 95, the cured product exhibits insufficient rubber elasticity and decreased elongation in some cases.

When the polymer fine particles (B) having a core-shell structure in which a core layer has a glass transition temperature of greater than 0°C are added to the flexible epoxy resin (A), the resultant cured product exhibits high elongation and excellent tensile strength. Although the mechanism is not clear, the following reason is assumed. If the epoxy resin does not have flexibility, even if the polymer fine particles (B) are blended, the cured product exhibits no

3

rubber elasticity and becomes rigid. The polymer fine particles (B) may serve as crack initiation sites during deformation.

Hence, the tensile strength is presumed to be reduced by the polymer fine particles (B). On the other hand, it is presumed that the cured product obtained using the flexible epoxy resin (A) exhibits rubber elasticity and has high followability to deformation, whereby the polymer fine particles (B) are hard to serve as the crack initiation sites. Further, deformation of the cured product is suppressed by making the glass transition temperature of the core layer of the polymer fine particles (B) larger than 0°C and dispersing the polymer fine particles (B) in the flexible epoxy resin, and the elastic modulus is increased while maintaining high elongation of the cured product, so that the tensile strength is presumed to become high. On the other hand, when the polymer fine particles in which the core layer has a glass transition temperature of less than 0°C are blended, the polymer fine particles are easily deformed in accordance with deformation of a matrix resin such as the flexible epoxy resin (A) due to low elasticity of the polymer fine particles at room temperature, so that the tensile strength is not improved. Also, rigid particle such as inorganic fillers have the same effect as that of the polymer fine particles (B) having a core layer whose glass transition temperature is greater than 0°C. However, the degree of the effects is inferior to that of the polymer fine particles (B). The reason for this is presumed to be that the inorganic particle has a small interaction with the matrix resin (A), whereas the polymer fine particles (B) having the core-shell structure has a large interaction with the matrix resin.

<Flexible Epoxy Resin (A)>

The flexible epoxy resin (A) is used as a main component of the curable composition of the present invention.

The cured product obtained by curing a composition containing the flexible epoxy resin (A) exhibits rubber elasticity at 23°C. Regardless of the type of main chain skeleton of the component, the kind of epoxy group, the number of epoxy groups per molecule, the size of molecular weight, the presence or absence of branching, and the like, the cured product obtained by curing a composition containing the flexible epoxy resin (A) under the following conditions preferably has a type A durometer hardness value of 1 to 95.

[Type A Durometer Hardness of Cured Product Obtained by Curing Composition Containing Flexible Epoxy Resin (A)]

A value of type A durometer hardness obtained by measuring a 6 mm-thick cured product sheet at 23°C and 50% RH using a type A durometer hardness tester in accordance with JIS K-6253, wherein the sheet is obtained by adding ($1/\alpha \times 8510$) parts by mass of isophoronediamine to 100 parts by mass of the flexible epoxy resin having an epoxy equivalent of ($\alpha$) g/eq, mixing the mixture, pouring the centrifugally defoamed mixture into a mold so as not to introduce bubbles, curing the mixture at 23°C for 24 hours, and further curing it at 80°C for 40 hours.

In the case of using a plurality of epoxy resins, it can be determined whether the epoxy resin mixture has flexibility in a preferred range depending on whether the mixture of the epoxy resins satisfies the above type A durometer hardness.

As the flexible epoxy resin, various flexible epoxy resins can be used. Examples thereof include a fatty acid-modified epoxy resin obtained by addition reaction of aliphatic polybasic acids such as dimer acid-modified epoxy resin with an epoxy resin, a butadiene-based epoxy resin (e.g., epoxidized polybutadiene having an epoxy group introduced by oxidation of vinyl group of 1,2-polybutadiene), a thiol-modified epoxy resin obtained by modifying an epoxy resin with dithioether or the like, a polyol-modified epoxy resin, an ε-caprolactone-modified epoxy resin, a rubber-modified epoxy resin, a urethane-modified epoxy resin, an epoxy group-containing (meth)acrylic copolymer, and the like. These epoxy resins may be used individually, or in combination of two or more kinds thereof.

Among the above flexible epoxy resins, the fatty acid-modified epoxy resin, the polyol-modified epoxy resin, and the epoxy group-containing (meth)acrylic copolymer are preferred because of their low viscosity and excellent handling properties. The fatty acid-modified epoxy resin is more preferred because it is excellent in tensile properties of the cured product. Particularly, the dimer acid-modified epoxy resin is preferred because it has a low viscosity value when the polymer fine particles (B) described below are dispersed and are excellent in handling properties.

<Polyol-Modified Epoxy Resin>

Examples of the polyol-modified epoxy resin include glycidyl ether of bisphenol A-ethylene oxide adduct such as bisphenol A bis(polyethylene glycol glycidyl ether)ether; glycidyl ether of bisphenol A propylene oxide adduct such as bisphenol A bis(polypropylene glycol glycidyl ether)ether; polyethylene glycol diglycidyl ether; polypropylene glycol diglycidyl ether; glycidyl ether of acetal reaction product of bisphenols (e.g., bisphenol A) and vinyl ethers (e.g., triethylene glycol divinyl ether); and glycidyl ether of aliphatic polyol or aliphatic alcohol.

<ε-Caprolactone-Modified Epoxy Resin>

Examples of the ε-caprolactone-modified epoxy resin include ε-caprolactone-modified bifunctional epoxy resins such as ε-caprolactone-modified bisphenol A type epoxy resin and ε-caprolactone-modified 3',4'-epoxycyclohexylmethyl-3,4-epoxycyclohexanecarboxylate.

<Rubber-Modified Epoxy Resin>

The rubber-modified epoxy resin is a reaction product obtained by reacting a rubber with an epoxy group-containing compound. Examples of the rubber include rubber-based polymers such as acrylonitrile butadiene rubber (NBR), styrene butadiene rubber (SBR), hydrogenated nitrile rubber (HNBR), ethylene propylene rubber (EPDM), acrylic rubber (ACM), butyl rubber (IIR), butadiene rubber, and polyoxyalkylene (e.g., polypropylene oxide, polyethylene oxide, polytetramethylene oxide). The rubber-based polymer preferably has a reactive group such as an amino group, a hydroxyl group, or a carboxyl group at the terminal. The rubber-modified epoxy resin used in the present invention is a product obtained by reacting the rubber-based polymer with the epoxy resin at an appropriate blending ratio by a known method. Among them, acrylonitrile-butadiene rubber-modified epoxy resin and polyoxyalkylene-modified epoxy resin are preferred from the viewpoints of the elongation characteristics and tensile strength of the curable composition to be obtained, and acrylonitrile-butadiene rubber modified epoxy resin is more preferred. The acrylonitrile-butadiene rubber-modified epoxy resin can be obtained, for example, by reacting carboxyl-terminal NBR (CTBN) with the bisphenol A type epoxy resin.

The amount of acrylonitrile monomer is preferably 5 to 40 % by mass, more preferably 10 to 35% by mass, even preferably 15 to 30 % by mass, and particularly preferably 20 to 30 % by mass per 100 % by mass of the acrylonitrile-butadiene rubber in the view of the elongation and tensile strength of the obtained cured product.

Further, for example, an addition reaction product (hereinafter also referred to as "adduct") of amino-terminated polyoxyalkylene and epoxy resin is also included in the rubber-modified epoxy resin. The adduct can be easily produced by a known method as described in, for example, U.S. Patent. Nos. 5,084,532 and 6,015,865. Examples of the epoxy resin used in producing the adduct include specific examples of the flexible epoxy resin (A) exemplified in the above, and the epoxy resin is preferably the bisphenol A type or F type epoxy resin, and more preferably the bisphenol A type epoxy resin. Examples of the amino-terminated polyoxyalkylene which is commercially available and used in producing adducts include Jeffamine D-230, Jeffamine D-400, Jeffamine D-2000, Jeffamine D-4000, and Jeffamine T-5000 (manufactured by Huntsman Corporation).

The average number of epoxide-reactive terminal groups per molecule in the rubber is preferably from 1.5 to 2.5, and more preferably from 1.8 to 2.2. The number average molecular weight of the rubber is preferably from 1,000 to 8,000, more preferably from 2,000 to 6,000, and particularly preferably from 3,000 to 5,000, in terms of polystyrene equivalent molecular weight measured by GPC.

There is no particular limitation on the method of producing the rubber-modified epoxy resin, and it can be produced, for example, by reacting the rubber with the epoxy group-containing compound in a large amount of the epoxy group-containing compound. Specifically, the resin is preferably produced by reacting two equivalents or more of the epoxy group-containing compound per equivalent of the epoxy-reactive terminal group in the rubber. More preferably, a sufficient amount of the epoxy group-containing compound is reacted such that the obtained product becomes a mixture of the adduct of the rubber and the epoxy group-containing compound and the free epoxy group-containing compound. The rubber-modified epoxy resin is produced by heating to a temperature of 100 to 250°C, for example, in the presence of a catalyst such as phenyl dimethyl urea or triphenylphosphine. There is no particular limitation on the epoxy group-containing compound to be used for producing the rubber-modified epoxy resin, and the compound is preferably a bisphenol A type or F type epoxy resin and more preferably a bisphenol A type epoxy resin. In the present invention, when an excessive amount of the epoxy group-containing compound is used during the production of the rubber-modified epoxy resin, the unreacted epoxy group-containing compound remaining after the reaction is not included in the rubber-modified epoxy resin of the present invention.

In the rubber-modified epoxy resin, it is possible to modify the epoxy resin by pre-reacting with the bisphenol component. The amount of bisphenol component used for the modification is preferably from 3 to 35 parts by mass, and more preferably from 5 to 25 parts by mass per 100 parts by mass of the rubber component in the rubber-modified epoxy resin. A cured product obtained by curing a curable composition containing a modified rubber-modified epoxy resin exhibits much higher elongation characteristics and excellent tensile strength.

The glass transition temperature (Tg) of the rubber-modified epoxy resin is not particularly limited, and it is preferably - 25°C or less, more preferably -35°C or less, even preferably -40°C or less, and particularly preferably -50°C or less.

<Urethane-modified epoxy resin>

The urethane-modified epoxy resin is a reaction product obtained by reacting a compound having a group having a reactiveness to an isocyanate group and an epoxy group, and a urethane prepolymer containing an isocyanate group. For example, the urethane-modified epoxy resin is obtained by reacting an epoxy compound having a hydroxyl group and a urethane prepolymer.

<Epoxy group-containing (meth)acrylic copoylmer>

The epoxy group-containing (meth)acrylic copolymer is a (meth)acrylic copolymer having an epoxy group in a molecule, and preferably a polymer obtained by copolymerizing an epoxy-containing monomer and other (meth)acrylic monomer. Concretely, the epoxy group-containing (meth)acrylic copolymer includes a copolymer such as the epoxy group-containing monomer such as glycidyl (meth)acrylate and butyl acrylate, 2-ethylhexyl acrylate, or the like.

<Fatty Acid-Modified Epoxy Resin>

The fatty acid-modified epoxy resin is obtained by addition reaction of an aliphatic polybasic acid or the like to an epoxy resin. Examples of the aliphatic polybasic acids include an unsaturated polycarboxylic acid having no aromatic ring or its anhydride, such as maleic acid, maleic anhydride, fumaric acid, itaconic acid, itaconic anhydride or citraconic acid, or a saturated polycarboxylic acid having no aromatic ring or its anhydride, such as tetrahydrophthalic acid, tetrahydrophthalic anhydride, hexahydrophthalic acid, hexahydrophthalic anhydride, cyclohexanedicarboxylic acid, succinic acid, malonic acid, glutaric acid, adipic acid, azelaic acid, sebacic acid, 1,12-dodecanedioic acid, and dimer acid. From the viewpoint of elongation properties of the cured product to be obtained, a dimer acid is particularly preferred.
The various flexible epoxy resins can be used individually or in combination of two or more kinds thereof.
The flexible epoxy resin (A) has an epoxy equivalent of preferably from 200 to 4000 g/eq, more preferably from 250 to 2000 g/eq, even preferably from 300 to 1500 g/eq, and particularly preferably from 350 to 1200 g/eq. When the epoxy equivalent is less than 200 g/eq, the rubber elasticity may be insufficient. When the epoxy equivalent exceeds 4000 g/eq, the viscosity becomes high and the workability of the curable composition may be poor. From the viewpoint of lowering the viscosity of the curable composition, the flexible epoxy resin (A) may have the epoxy equivalent of 700 g/eq or less, or 500 g/eq or less.
The number average molecular weight of the flexible epoxy resin (A) is preferably from 400 to 8,000, more preferably from 500 to 4,000, even preferably from 600 to 3,000, and particularly preferably from 700 to 2,400 in terms of polystyrene equivalent molecular weight measured by GPC. When the number average molecular weight is less than 400, the rubber elasticity may be insufficient. When the number average molecular weight exceeds 8000, the viscosity becomes high and the workability of the curable composition may be poor.
The flexible epoxy resin (A) has at least 1.1 epoxy groups in one molecule. It is preferable to use the flexible epoxy resin having 1.2 or more of epoxy groups from the viewpoint in which the reactivity is high during curing and the cured product easily forms a three-dimensional network. It is more preferable to use the flexible epoxy resin having 1.4 or more and 3 or less of epoxy groups, more preferably 1.6 or more and 2.7 or less of epoxy groups, and particularly preferably 1.8 or more and 2.4 or less of epoxy groups in one molecule, from the viewpoint of the elongation and tensile strength of the cured product to be obtained.
As the main component of the curable composition of the present invention, the flexible epoxy resin (A) is used, and an epoxy resin (rigid epoxy resin) other than the flexible epoxy resin may be used together in a small amount to the extent that the effect of the present invention is not impaired.
The hard epoxy resin includes flame-retardant epoxy resins such as a bisphenol A epoxy resin, a bisphenol F epoxy resin, a bisphenol AD epoxy resin, a bisphenol S epoxy resin, a glycidyl ester epoxy resin, a glycidyl amine epoxy resin, a novolac epoxy resin, a hydrogenated bisphenol A (or F) epoxy resin, a fluorinated epoxy resin, and a glycidyl ether of tetrabromobisphenol A, a p-hydroxybenzoic acid glycidyl ether ester epoxy resin, an m-aminophenol epoxy resin, a diaminodiphenylmethane epoxy resin, alicyclic epoxy resins, N,N-diglycidylaniline, N,N-diglycidyl-o-toluidine, triglycidyl isocyanurate, divinylbenzene dioxide, resorcinol diglycidyl ether and the like. However, the epoxy resin is not limited to the above-mentioned epoxy resins, and epoxy resins commonly used may be used.
However, in some cases, the cured product has high modulus and decreased elongation and no rubber elasticity according to amounts of hard epoxy resin. An amount of the hard epoxy resin is preferably 10 parts by mass or less, more preferably 5 parts by mass or less, even preferably 1 part by mass or less, and particularly preferably 0.1 parts by mass or less per 100 parts by mass of the epoxy resin (A). Most preferably, the flexible epoxy resin (A) substantially does not contain the hard epoxy resin.

<Polymer fine particles (B)>

The curable composition of the present invention contains 1 to 150 parts by mass of polymer fine particles (B) having a core-shell structure relative to 100 parts by mass of the flexible epoxy resin (A). The cured product obtained has excellent mechanical strength by adding the polymer fine particles (B).

An amount of the polymer fine particles (B) is 1 to 150 parts by mass, preferably 2 to 120 parts by mass, more preferably 3 to 100 parts by mass, and even preferably 4 to 70 parts by mass, per 100 parts by mass of the flexible epoxy resin (A) in the viewpoint of the balance between ease of handling of the curable composition and improving effect of mechanical strength of the cured product. The amount of the polymer fine particles (B) may be 30 to 70 parts by mass or 40 to 70 parts by mass per 100 parts by mass of the flexible epoxy resin (A).

The particle diameter of the polymer fine particles is not particularly limited, and the volume average particle diameter (Mv) of the polymer fine particles is preferably 10 to 2000 nm, more preferably 30 to 600 nm, further preferably 50 to 400 nm, and especially preferably 100 to 200 nm in the view of industrial productivity. The volume average particle diameter of the polymer fine particles can be measured by using Microtrack UPA 150 (manufactured by Nikkiso Co., Ltd.).

In the curable composition of the present invention, the polymer fine particles (B) preferably have half value width of 0.5 times or more and 1 time or less the number average particle diameter in the number particle size distribution, because the curable composition obtained has lower viscosity and is handled easily.

The polymer fine particles (B) have preferably the maximal of two or more in the number particle size distribution in the view of easily realizing a given particle size distribution, more preferably the maximal of two or three, and further preferably the maximal of two in the view of the work and cost during manufacture. Especially, it is preferable that the polymer fine particles (B) contain polymer fine particles having the volume average particle diameter of not less than 10 nm and less than 150 nm in an amount of 10 to 90 % by mass and polymer fine particles having the volume average particle diameter of not less than 150 nm and not more than 2000 nm in an amount of 90 to 10 % by mass.

It is preferable that the polymer fine particles (B) are dispersed at the state of the primary particles in the curable composition. In the present invention, "the polymer fine particles are dispersed at the state of the primary particles in the curable composition" (hereinafter referred to as primary dispersion in some cases) mean that the polymer fine particles are substantially dispersed individually (without contacting each other). The dispersion state of the polymer fine particles can be confirmed by dissolving a part of the curable composition in a solvent such as methylethylketone, and measuring the particle diameter by using a particle diameter measuring device with laser beam scattering and the like.

Stable dispersion of the polymer fine particles means that the polymer fine particles are dispersed for a long period under general conditions without aggregating, separating and precipitating in the continuous layer. In addition, the distribution of the polymer fine particles substantially does not change in the continuous layer, and "stable dispersion" can be maintained even when the composition containing the polymer fine particles is heated in the range of no danger so as to stir the composition and lower the viscosity of the composition.

The polymer fine particles (B) may be used individually or in combination of two or more kinds.

The polymer fine particles (B) necessarily have a core-shell structure including at least two layers of a core layer and a shell layer. In addition, the polymer fine particles (B) can have a structure having three or more layers composed of a core layer, an intermediate layer coated on the core layer, and a shell layer coated on the intermediate layer.

Hereinafter, each layer of the polymer fine particles is concretely explained.

«Core layer»

It is essential that the core layer has a glass transition temperature of more than 0 °C and the glass transition temperature is determined by calculating a value of Kelvin temperature according to the numerical formula (1) and converting the value of Kelvin temperature to a value of Celsius temperature so as to improve the mechanical strength of the cured product obtained by curing the curable composition of the present invention.

$$1/Tg = \Sigma(M_i/Tg_i) \qquad (1)$$

wherein $M_i$ represents a mass fraction of a monomer unit i selected from butadiene unit and a non-crosslinking monomer unit constituting the core layer of the polymer fine particles (B), and $Tg_i$ represents a glass transition temperature (K) of a homopolymer composed of the monomer unit i.

The glass transition temperature of the homopolymer composed of the non-crosslinking monomer can be confirmed by documents such as "POLYMER HANDBOOK (fourth edition)" edited by J. Brandrup and catalogs.

In the core layer of the polymer fine particles (B), the upper limit of the glass transition temperature as calculated according to the numerical formula (1) is not limited particularly, and preferably 300 °C or less, or 200 °C or less in the viewpoint of the availability. The core layer has the glass transition temperature of more preferably 15 to 200 °C, or 15 to 150 °C, even preferably 30 to 150 °C, and particularly preferably 50 to 110 °C. Also, the core layer may have the glass transition temperature of 25 to 100 °C or 40 to 70 °C. The glass transition temperature of the core layer may result in a decreased viscosity of the curable composition. In addition, a maximum tensile stress of the cured product becomes higher as the core layer has a higher glass transition temperature.

The core layer preferably contains a (meth)acrylate polymer obtained by polymerizing with a (meth)acrylate monomer as a main component in the viewpoint of a decreased viscosity of the curable composition. The (meth)acrylate polymer contains, for example, 50 % by mass or more, preferably 70 % by mass or more of the (meth)acrylate monomer unit per a total monomer unit of the core layer.

A concrete example of the non-crosslinking monomer includes alkyl (meth)acrylates such as methyl(meth)acrylate, ethyl(meth)acrylate, butyl(meth)acrylate, 2-ethylhexyl(meth)acrylate, octyl(meth)acrylate, dodecyl(meth)acrylate, stearyl(meth)acrylate, isobornyl (meth)acrylate, dicyclopentanyl (meth)acrylate, 1-admantyl (meth)acrylate, behenyl(meth)acrylate; aromatic ring containing (meth)acrylates such as phenoxy ethyl(meth) acrylate, benzyl(meth)acrylate; hydroxyalkyl(meth)acrylates such as 2-hydroxyethyl(meth)acrylate, 4-hydroxybutyl(meth)acrylate; glycidyl (meth)acrylates such as glycidyl (meth) acrylate and glycidyl alkyl (meth)acrylate; alkoxyalkyl(meth)acrylates; vinyl arenes such as styrene, α-methylstyrene, monochlorostyrene, dichlorostyrene, 2-vinyl naphthalene, 3-methylstyrene, 4-methylstyrene, 2,4-dimethylstyrene, 2,5-dimethylstyrene, 3,5-dimethylstyrene, 2,4,6-trimethylstyrene, 4-methoxystyrene, 4-ethoxystyrene, 4-acetoxystyrene, 4-hydroxystyrene; vinyl esters such as vinyl benzoate, vinyl cyclohexanoate; acrylamides such as acrylamide, isopropylacrylamide, N-vinyl pyrrolidone; vinyl carboxylic acids such as acrylic acid, methacrylic acid; vinyl cyanides such as acrylonitrile, methacrylonitrile; halogenated vinyls such as chloro vinyl, bromo vinyl, chloroprene; vinyl acetate; alkenes such as ethylene, propylene, butylene, isobutylene, and the like. These non-crosslinking monomers may be used individually or in combination of two or more (meth)acrylate monomers. Among these, the non-crosslinking monomer is preferably alkylmethacrylates having 1 to 4 carbons, vinyl arenes, vinyl cyanides in the viewpoint of the good availability and high Tg of the polymer. Particularly preferably, the non-crosslinking monomer is methylmethacrylate, ethylmethacrylate, isopropylmethacrylate, isobutylmethacrylate, n-butylmethacrylate, t-butylmethacrylate, styrene, α-methylstyrene, acrylonitrile in the viewpoint of good availability and high Tg of the polymer.

In the core layer, it is preferable that a crosslinked structure is introduced in the polymer polymerized with the above monomer(s) in the view of retaining the dispersion stability of the polymer fine particles (B) in the curable composition. When the crosslinked structure is introduced in the core layer, there is a tendency that the curable composition of the present invention has a decreased viscosity, and the cured product has high strength. As methods for introducing the crosslinked structure, a conventional method can be used. A method for introducing the crosslinked structure to the polymer polymerized with the above monomer(s) includes a method for copolymerizing the non-crosslinking monomer and a crosslinking monomer such as a multifunctional monomer and a mercapto group-containing compound and the like.

The core layer may contain a polymer having no crosslinked structure obtained by polymerizing only the non-crosslinking monomer. The core layer preferably contains a polymer having a crosslinked structure obtained by polymerizing 80 to 99.9 % by mass of the non-crosslinking monomer and 0.1 to 20 % by mass of the crosslinking monomer, more preferably a polymer having a crosslinked structure obtained by polymerizing 80 to 99 % by mass of the non-crosslinking monomer and 1 to 20 % by mass of the crosslinking monomer, even preferably a polymer having a crosslinked structure obtained by polymerizing 90 to 98 % by mass of the non-crosslinking monomer and 2 to 10 % by mass of the crosslinking monomer, and most preferably a polymer having a crosslinked structure obtained by polymerizing 94 to 97 % by mass of the non-crosslinking monomer and 3 to 6 % by mass of the crosslinking monomer.

When the core layer contains a crosslinked polymer, the core layer has the gel content of preferably 60 % by mass or more, more preferably 80 % by mass or more, further preferably 90 % by mass or more, and especially preferably 95 % by mass or more. The gel content used herein means that a ratio of an insoluble amount to a total amount of an insoluble amount and a soluble amount in the case where 0.5 g of polymer fine particles obtained by coagulation and dry was immersed in 100 g of toluene, and an insoluble part and a soluble part were divided after standing at 23 °C for 24 hours.

The multifunctional monomer includes allylalkyl (meth)acrylates such as allyl(meth)acrylate, allylalkyl(meth)acrylate; allyloxyalkyl(meth)acrylates; multifunctional (meth)acrylates having two or more (meth)acrylic groups such as (poly)ethylene glycol di(meth)acrylate, butanediol di(meth)acrylate, ethylene glycol di(meth)acrylate, triethylene glycol di(meth)acrylate, tetraethylene glycol di(meth)acrylate; conjugated diene monomers such as 1,3-butadiene, isoprene, 2-chloro-1,3-butadiene, 2-methyl-1,3-butadiene; diallyl phthalate, triallylcyanurate, triallylisocyanurate, divinylbenzene and the like. Allylmethacrylate, triallyl isocyanurate, butanediol di(meth)acrylate, and divinyl benzene are particularly preferable. The multifunctional monomer may be used individually or in combination of two or more multifunctional monomers.

The volume average particle diameter of the core layer is preferably 0.03 to 2 μm and more preferably 0.05 to 1 μm. It is difficult to stably obtain a core layer having the volume average particle diameter of less than 0.03 μm in many cases. In the case of the volume average particle diameter of greater than 2 μm, the strength of the cured product formed from the curable composition are lowered in some cases. The volume average particle diameter can be measured by using Microtrac UPA 150 (manufactured by Nikkiso Co., Ltd).

The core layer preferably does not contain a conjugated diene monomer (particularly 1,3-butadiene).

The amount of the core layer is preferably 40 to 97 % by mass, more preferably 60 to 95 % by mass, even preferably 70 to 93 % by mass, and especially preferably 80 to 90 % by mass per 100 % by mass of the whole polymer fine particles. In the case of the core layer of less than 40 % by mass, effect of improving mechanical strength of the cured product may be lowered. In the case of the core layer of more than 97 % by mass, the polymer fine particles are easily aggregated, and the handling of the curable composition may become difficult due to high viscosity. A high mass ratio of the shell layer to the core layer may result in a decreased viscosity of the curable composition. A mass ratio of the shell layer to the core layer may be 0.20 or more or 0.25 or more.

In the present invention, the core layer may be composed of monolayer in some cases, and may be composed of multilayers. In the case where the core layer is composed of multilayer, the polymer composition of each layer may be different each other.

<<Intermediate layer>>

In the present invention, an intermediate layer may be formed between the core layer and the shell layer as necessary. Especially, the intermediate layer may be formed as a surface-crosslinked layer as set forth below.

The surface-crosslinked layer is a polymer of the intermediate layer polymerized with rubber-crosslinked layer components containing 30 to 100 % by mass of a multifunctional monomer having two or more radically polymerizable double bonds in the same molecule and 0 to 70 % by mass of other vinyl monomer. The surface-crosslinked layer has effects of lowering the viscosity of the curable composition of the present invention, and improving the dispersibility of the polymer fine particles (B) to the flexible epoxy resin (A). In addition, the surface-crosslinked layer has an effect of improving crosslink density of the core layer and graft efficiency of the shell layer.

A concrete example of the multifunctional monomer is exemplified by the same monomer as the above-mentioned multifunctional monomer. The multifunctional monomer is preferably allylmethacrylate, and triallylisocyanurate.

<<Shell layer>>

The shell layer existing at outermost of the polymer fine particles is a polymer polymerized with a monomer for forming the shell layer. The shell layer contains a polymer for improving the compatibility of the polymer fine particles (B) and the flexible epoxy resin (A) and dispersing the polymer fine particles at the state of primary particles in the curable composition or the cured product obtained therefrom of the present invention.

The shell polymer for forming the shell layer is preferably grafted on the core layer and/or the intermediate layer. When the phrase "grafted on the core layer" is referred to, the present invention contains an embodiment in which the shell layer is grafted on the intermediate layer in the case of forming the intermediate layer on the core layer. More precisely, it is preferable that a monomer used in the formation of the shell layer is graft-polymerized on the core polymer for forming the core layer, and the shell polymer is chemically bonded to the core polymer. It is preferable that the shell polymer is formed by graft-polymerizing the monomer for forming the shell layer under the presence of the core polymer, and a part or all of the core polymer is covered with the shell polymer. Such a polymerization can be carried out by adding a monomer for constituting the shell polymer to a latex containing the core polymer prepared in the state of an aqueous latex, and polymerizing the monomer and the core polymer.

The monomer for forming the shell layer is preferably an aromatic vinyl monomer, a vinyl cyanide monomer, a (meth) acrylate monomer, and more preferably a (meth) acrylate monomer in the view of the compatibility and the dispersibility of the polymer fine particles (B) of the curable composition. The shell layer preferably contains a (meth)acrylate polymer obtained by polymerized with a (meth)acrylate monomer as a main component in the viewpoint of a decreased viscosity of the curable composition. These monomers for forming the shell layer may be used individually or in the appropriate combination. The (meth)acrylate polymer contains, for example, 50 % by mass or more, preferably 70 % by mass or more of the (meth)acrylate monomer unit per 100 % by mass of a total monomer unit of the shell layer.

The monomer for forming the shell layer may contain a monomer having one or more reactive groups selected from the group consisting of an epoxy group, an oxetane group, a hydroxyl group, an amino group, an imide group, a carboxylic acid group, a carboxylic acid anhydride group, a cyclic ester, a cyclic amide group, a benzoxazine group, and a cyanate ester group in the viewpoint of chemically bonding the polymer fine particles (B) with the flexible epoxy resin (A) so as to maintain successfully the dispersed state of the polymer fine particles (B) in the cured product or the polymer without aggregating. The monomer for forming the shell layer preferably contains a monomer having an epoxy group. Physical properties such as a stress at 100% elongation and maximum tensile stress of the cured product can be improved by using the monomer having an epoxy group.

The monomer having an epoxy group is preferably used for the formation of the shell layer, and more preferably used for the shell layer solely.

In addition, a multifunctional monomer having two or more radically polymerizable double bonds is preferably used as a monomer for forming the shell layer because the swelling of the polymer fine particles is prevented in the curable composition, or the viscosity of the curable composition becomes lower to improve the handling.

The multifunctional monomer is contained in an amount of preferably from 1 to 20 % by mass, and more preferably from 5 to 15 % by mass, per 100 % by mass of a monomer for forming the shell layer.

A concrete example of the aromatic vinyl monomer includes styrene, α-methyl styrene, p-methyl styrene, divinyl benzene and the like.

A concrete example of the vinyl cyanide monomer includes acrylonitrile, and methacrylonitrile.

A concrete example of the (meth)acrylate monomer includes (meth) acrylic acid alkyl ester such as methyl (meth)acrylate, ethyl (meth)acrylate, butyl (meth)acrylate; (meth) acrylic acid hydroxyl alkyl ester such as hydroxy ethyl (meth)acrylate, hydroxy butyl (meth)acrylate and the like.

A concrete example of the monomer containing an epoxy group includes glycidyl group-containing vinyl monomer such as glycidyl (meth) acrylate, 4-hydroxy butyl(meth)acrylate glycidyl ether, allyl glycidyl ether, and the like.

A concrete example of the multifunctional monomer having two or more radically polymerizable double bonds is exemplified by the same monomer as the above-mentioned multifunctional monomer. The multifunctional monomer is preferably allylmethacrylate, and triallylisocyanurate.

These monomers may be used individually or in combination of two or more monomers.

The shell layer may be formed with other monomer in addition to the above monomer.

An amount of the epoxy group of the shell layer of the polymer fine particles (B) or an amount of the epoxy group per 1g of monomers for forming the shell layer is preferably 0.05 to 3.5 mmol/g, more preferably 0.1 to 2.0 mmol/g, even preferably 0.2 to 1.0 mmol/g, and particularly preferably 0.3 to 0.7 mmol/g. In the case where the amount of the epoxy group of the shell layer is less than 0.05 mmol/g, the cured product formed from the curable composition has a decreased mechanical strength in some cases. When the amount of the epoxy group of the shell layer is more than 3.5 mmol/g, there is a tendency to increase a viscosity of the curable composition after storage.

The graft rate of the shell layer is preferably 70 % or more, more preferably 80 % or more, and further preferably 90 % or more. In the case of less than 70 % of the graft rate, the viscosity of the curable composition may be increased. Incidentally, the method of calculating the graft rate is as follows.

The powder of the polymer fine particles is obtained by coagulating and dehydrating the aqueous latex containing the polymer fine particles, and drying the polymer fine particles. Then, 2g of the powder of the polymer fine particles is immersed in 100g of methylethylketone (MEK) at 23 °C for 24 hours, separated in MEK soluble content and MEK insoluble content, and separated methanol insoluble content from MEK soluble content. Thus, the graft rate is calculated by determining a mass ratio of MEK insoluble content to the total content of MEK insoluble content and methanol insoluble content.

«Method for preparing polymer fine particles»

(Method for preparing core layer)

The core layer constituting the polymer fine particles used in the present invention can be prepared according to emulsion polymerization, suspension polymerization, micro-suspension polymerization and the like, and methods described in WO2005/028546 can be used. The monomer for forming the core layer preferably is polymerized with emulsion polymerization.

(Method of forming shell layer and intermediate layer)

The intermediate layer can be formed by polymerizing a monomer for forming the intermediate layer with a known radical polymerization. In the case where the core polymer constituting the core layer is obtained as an emulsion, it is preferable that the polymerization of the monomer for forming the intermediate layer is carried out with the emulsion polymerization.

The shell layer can be formed by polymerizing a monomer for forming the shell layer with a known radical polymerization. In the case where a polymer particle precursor constituting the core layer or the core layer covered with the intermediate layer is obtained as an emulsion, it is preferable that the polymerization of the monomer for forming the shell layer is carried out with the emulsion polymerization, and the shell layer can be prepared according to methods of WO 2005/028546.

The following dispersants can be mentioned as examples of emulsifiers (dispersants) usable in the emulsion polymerization: various acids including alkyl or aryl sulfonic acids such as dioctylsulfosuccinic acid and dodecylbenzenesulfonic acid, alkyl or arylether sulfonic acids, alkyl or arylsulfuric acids such as dodecylsulfuric acids, alkyl or arylether sulfuric acids, alkyl or aryl-substituted phosphoric acids, alkyl or arylether-substituted phosphoric acids, N-alkyl or arylsarcosinic acids such as dodecylsarcosinic acid, alkyl or arylcarboxylic acids such as oleic acid and stearic acid, and alkyl or arylether carboxylic acids, and anionic emulsifiers (dispersants) such as alkali metal salts or ammonium salts of these acids; nonionic emulsifiers (dispersants) such as alkyl or aryl-substituted polyethylene glycols; and derivatives of polyvinyl alcohol, alkyl-substituted celluloses, polyvinyl pyrrolidone, and polyacrylic acid. Any of these emulsifiers (dispersants) may be used individually, or two or more of these may be used in combination.

The amount of the emulsifier (dispersant) is preferably as small as possible, but the dispersion stability of the polymer fine particles in the aqueous latex should be secured. The emulsifier (dispersant) preferably has as high water solubility as possible. An emulsifier (dispersant) having high water solubility can be easily washed out with water, and thus its bad influence on the final cured product can be easily avoided.

As known initiators of emulsion-polymerization, thermal decomposition initiator such as 2,2'-azobisisobutylonitrile, organic peroxide, hydrogen peroxide, potassium persulphate, ammonium persulfate can be used.

In addition, redox type initiators of peroxides such as organic peroxides (e.g. t-butylperoxy isopropyl carbonate, p-menthane hydroperoxide, cumene hydroperoxide, dicumyl peroxide, t-butyl hydroperoxide, di-t-butyl peroxide, t-hexyl peroxide, etc.) and inorganic peroxides (e.g. hydrogen peroxide, potassium persulfate, ammonium persulfate, etc.) in combination with reducing agents (e.g. sodium formaldehyde sulfoxylate, glucose, etc.) as needed and transition metal salts (e.g. ferrous sulfate, etc.) as needed, chelating agents (e.g. disodium ethylenediaminetetraacetate, etc.) as needed, or further phosphorus-containing compounds (e.g. sodium pyrophosphate, etc.) as needed can also be used.

In the case of polymerization using a redox type initiator, it is possible to carry out the polymerization even at a low temperature at which the peroxide does not cause substantially thermal decomposition and to set the polymerization temperature in a wide range, and therefore such a polymerization is preferable. Above all, organic peroxides such as cumene hydroperoxide, dicumyl peroxide, and t-butyl hydroperoxide are preferably used as a redox type initiator. The amount of the initiator or the amount of the reducing agent/transition metal salt/chelating agent when a redox-type initiator is used can be used in the range known in the art. Also, when a monomer having two or more radically polymerizable double bonds is polymerized, a known chain transfer agent can be used in the known range. It is possible to additionally use a surfactant, and such use of the surfactant is also included in the known range.

The conditions to be applied in the polymerization, such as polymerization temperature, pressure, and deoxidation, are those known in the art. In addition, polymerization of the monomer for intermediate layer formation may be carried out in one stage or in two or more stages. Such polymerization includes, for example, a method of adding a monomer for intermediate layer formation at one time to an emulsion of a core polymer constituting a core layer, a method of continuously adding a monomer for intermediate layer formation to an emulsion of a core polymer constituting a core layer, and, in addition, a method of carrying out polymerization after adding an emulsion of a core polymer constituting a core layer to a reactor into which a monomer for intermediate layer formation has previously been charged.

<Epoxy Curing Agent (C)>

In the present invention, the epoxy curing agent (C) can be used, if necessary.

When the curable composition of the present invention is used as a one-component type composition (such as a one-pack type curable composition), it is preferable to select the epoxy curing agent (C) such that the adhesive cures rapidly when heated to a temperature of 80°C or more, preferably 140°C or more. On the contrary, it is preferable to select the epoxy curing agent (C) and the curing accelerator described below such that the adhesive cures very slowly at room temperature (about 22°C) or at a temperature of at least 50°C.

As the epoxy curing agent (C), a component exhibiting an activity upon heating (sometimes referred to as "latent curing agent") may be used. As such a latent epoxy curing agent, an N-containing curing agent such as a specific amine-based curing agent (including an imine-based curing agent) may be used. Examples thereof include a boron trichloride/amine complex, a boron trifluoride/amine complex, dicyandiamide, melamine, diallyl melamine, guanamine (e.g., acetoguanamine and benzoguanamine), aminotriazole (e.g., 3-amino-1,2,4-triazole), hydrazides (e.g., adipic acid dihydrazide, stearic acid dihydrazide, isophthalic acid dihydrazide, semicarbazide), cyanoacetamide, and aromatic polyamines (e.g., meta-phenylenediamine, diaminodiphenylmethane, diaminodiphenylsulfone). It is more preferable to use dicyandiamide, isophthalic acid dihydrazide, adipic acid dihydrazide, 4,4'-diaminodiphenylsulfone, and dicyandiamide is particularly preferred.

Among the above epoxy curing agents (C), the latent epoxy curing agent is preferred since the curable composition of the present invention can be made into a one-pack type composition.

On the other hand, when the curable composition of the present invention is used as a two-component type or multicomponent type composition, an amine-based curing agent except the above amine-based curing agent (including an imine-based curing agents) and a mercaptan-based curing agent (sometimes referred to as "room temperature curable curing agent") can be selected as the epoxy curing agent (C) exhibiting an activity at a relatively low temperature of about room temperature.

Examples of the epoxy curing agent (C) exhibiting an activity at a relatively low temperature include linear aliphatic polyamines (such as diethylenetriamine, triethylenetetramine, tetraethylenepentamine, dipropylenediamine, diethylaminopropylamine, and hexamethylenediamine); cyclic aliphatic polyamines (such as N-aminoethylpiperazine, bis(4-amino-3-methylcyclohexyl)methane, menthendiamine, isophoronediamine, 4,4'-diaminodicyclohexylmethane, 3,9-bis (3-aminopropyl)-2,4,8,10-tetraoxaspiro[5.5]undecane (spiroacetal diamine), norbornane diamine, tricyclodecanediamine, 1,3-bisaminomethylcyclohexane; aliphatic aromatic amines (such as m-xylene diamine; polyamine epoxy resin adducts (i.e., a reaction product of epoxy resin and excess polyamine); ketimines (i.e., a dehydration reaction product of polyamine and ketones such as methyl ethyl ketone and isobutyl methyl ketone); polyamidoamines (produced by condensation of a dimer (dimer acid) of tall oil fatty acid and polyamine); amido amines (produced by condensation of tall oil fatty acid and polyamine); and polymercaptans.

As another example of the epoxy curing agent (C), an amine-terminated polyether which contains a polyether main chain and has 1 to 4 (preferably 1.5 to 3) amino groups and/or imino groups on average per molecule can also be used. Examples of a commercially available amine-terminated polyether include Jeffamine D-230, Jeffamine D-400, Jeffamine D-2000, Jeffamine D-4000 and Jeffamine T-5000, which are manufactured by Huntsman Corporation.

Further, an amine-terminated rubber containing the main chain of conjugated diene-based polymers and having an average of 1 to 4 (more preferably 1.5 to 3) amino groups and/or imino groups per molecule may also be used as the epoxy curing agent (C). Here, the main chain of the rubber is preferably a homopolymer or copolymer of polybutadiene, more preferably a polybutadiene/acrylonitrile copolymer, and particularly preferably a polybutadiene/acrylonitrile copolymer having an acrylonitrile monomer content of 5 to 40% by mass (more preferably of 10 to 35% by mass, even preferably of 15 to 30% by mass). Examples of commercially available amine-terminated rubbers include Hypro 1300X16 ATBN, manufactured by CVC Thermoset Specialties.

Among the above amine-based curing agents exhibiting an activity at a relatively low temperature of about room temperature, polyamide amines, amine-terminated polyethers, and amine-terminated rubbers are more preferred. The use of polyamidoamines, amine-terminated polyethers, and amine-terminated rubbers in combination is particularly preferred.

As the epoxy curing agent (C), acid anhydrides and phenols may also be used. Acid anhydrides and phenols, and the like require higher temperatures than amine-based curing agents. However, the pot life is long, and the cured product has a good balance of physical properties such as electrical characteristics, chemical characteristics, and mechanical characteristics. Examples of the acid anhydrides include polysebacic acid polyanhydride, polyazelaic acid polyanhydride, succinic anhydride, citraconic anhydride, itaconic anhydride, alkenyl-substituted succinic anhydride, dodecenylsuccinic anhydride, maleic anhydride, tricarballylic anhydride, nadic anhydride, methyl nadic anhydride, linoleic acid adduct from maleic anhydride, alkylated terminal alkylene tetrahydrophthalic anhydride, methyl tetrahydrophthalic anhydride, tetrahydrophthalic anhydride, hexahydrophthalic anhydride, pyromellitic dianhydride, trimellitic anhydride, phthalic anhydride, tetrachlorophthalic anhydride, tetrabromophthalic anhydride, dichloromaleic anhydride, chloronadic anhydride, chlorendic anhydride, and maleic anhydride-grafted-polybutadiene. Examples of the phenols include phenol novolac, bisphenol A novolac, and cresol novolac.

The epoxy curing agent (C) may be used individually or in combination of two or more kinds thereof.

The epoxy curing agent (C) is used in an amount sufficient to cure the composition. Typically, enough of the curing agent is provided to consume at least 80% of the epoxide groups present in the composition. A large excessive amount exceeding the amount necessary for the consumption of the epoxide group is not usually required. The amount of the epoxy curing agent (C) used is preferably from 1 to 200 parts by mass, more preferably from 2 to 170 parts by mass, still more preferably from 3 to 140 parts by mass, and particularly preferably from 5 to 120 parts by mass, with respect to 100 parts by mass of the flexible epoxy resin (A). When the amount is less than 1 part by mass, the curability of the curable composition of the present invention may be deteriorated. When the amount exceeds 200 parts by mass, the curable composition of the present invention has poor storage stability and may be difficult to be handled.

<Curing accelerator>

The curing accelerator can be used in the present invention as necessary.

The curing accelerator is a catalyst for promoting the reaction of the epoxy group and the epoxide reactive group of the curing agent, the adhesive and the like.

Examples of the curing accelerator include ureas such as p-chlorophenyl-N,N-dimethylurea (trade name: Monuron), 3-phenyl-1,1-dimethylurea (trade name: Phenuron), 3,4-dichlorophenyl-N,N-dimethylurea (trade name: Diuron), N-(3-chloro-4-methylphenyl)-N',N'-dimethylurea (trade name: Chlortoluron), 1,1-dimethylphenylurea (trade name: Dyhard); tertiary amines such as benzyldimethylamine, 2,4,6-tris(dimethylaminomethyl)phenol, 2-(dimethylaminomethyl)phenol, 2,4,6-tris(dimethylaminomethyl)phenol incorporated in a poly(p-vinylphenol) matrix, triethylenediamine, and N,N-dimethylpiperidine; imidazoles such as C2-C12 alkyleneimidazole, N-arylimidazole, 2-methylimidazole, 2-ethyl-2-methylimidazole, N-butylimidazole, 1-cyanoethyl-2-undecylimidazolium trimellitate, and addition products of epoxy resins and imidazole; and 6-caprolactam. The catalyst may have been enclosed or alternatively may be latent such that it will become active only at the time when the temperature is raised.

The tertiary amines or the imidazoles can increase a curing rate, physical properties of a cured product, heat resistance, and the like by being used together with the amine-based curing agent of the epoxy curing agent (C).

The curing accelerator may be used individually or two or more of the same may be used in combination.

The amount of the curing accelerator to be used is preferably 0.1 to 10 parts by mass, more preferably 0.2 to 5 parts by mass, even preferably 0.5 to 3 parts by mass, and particularly preferably 0.8 to 2 parts by mass, relative to 100 parts by mass of the flexible epoxy resin (A). If it is less than 0.1 parts by mass, the curability of the curable composition of the present invention may be impaired. If it is more than 10 parts by mass, the storage stability of the curable composition of the present invention may be impaired and may be difficult to handle.

<Inorganic filler>

As the inorganic filler, the silicic acid and/or the silicate can be added to the curable composition of the present invention.

Specific examples of the silicic acid or the silicate include dry silica, wet silica, aluminum silicate, magnesium silicate, calcium silicate, wollastonite, talc, and the like.

The dry silica is called "fumed silica" and examples thereof include hydrophilic fumed silica the surface of which is untreated and hydrophobic fumed silica which is produced by chemically treating a silanol group part of hydrophilic fumed silica with silane or siloxane, and hydrophobic fumed silica is preferred in terms of the dispersibility in the flexible epoxy resin (A).

Specific examples of the filler other than silicic acids or silicates include reinforcing fillers such as dolomite and carbon black; colloidal calcium carbonate, heavy calcium carbonate, magnesium carbonate, titanium oxide, ferric oxide, a fine powder of aluminum, zinc oxide, active zinc flower, and the like.

The inorganic filler preferably is surface-treated with a surface treatment agent. The dispersibility of the inorganic filler into the composition is improved with the surface treatment, and thus the mechanical properties of the cured product is also improved.

An amount of the inorganic filler is preferably 1 to 100 parts by mass, more preferably 2 to 70 parts by mass, even preferably 5 to 40 parts by mass, and particularly preferably 7 to 20 parts by mass, per 100 parts by mass of the flexible epoxy resin (A).

The inorganic filler may be used individually or in combination of two or more thereof.

<Calcium oxide>

Calcium oxide may be added to the curable composition of the present invention according to necessity. The calcium oxide removes water via a reaction with the water contained in the curable composition, so that it solves various problems of physical properties caused by the presence of water. For example, it functions as an antifoaming agent by removal of water and inhibits decrease of adhesion strength.

The calcium oxide can be surface-treated with a surface treatment agent. The surface treatment improves the dispersibility of the calcium oxide in the composition, so that mechanical properties of a cured product to be obtained are improved compared with those obtained by using non-surface treated calcium oxide. The surface treatment agent is not particularly limited, and the surface treatment agent is preferably a fatty acid.

The amount of the calcium oxide to be used is preferably 0.1 to 10 parts by mass, more preferably 0.2 to 5 parts by mass, even preferably 0.5 to 3 parts by mass, and particularly preferably 1 to 2 parts by mass, relative to 100 parts by mass of the flexible epoxy resin (A). If it is less than 0.1 parts by mass, the effect of removing water may not be sufficient, and if it is more than 10 parts by mass, the tensile strength of a resulting cured product may be decreased. The calcium oxide may be used individually or two or more of the same may be used in combination.

<Monoepoxide>

In the present invention, a monoepoxide may be used according to necessity. The monoepoxide may function as a reactive diluent. Specific examples of the monoepoxide include aliphatic glycidyl ethers such as butyl glycidyl ether, or aromatic glycidyl ethers such as phenyl glycidyl ether and cresyl glycidyl ether, ethers composed of an alkyl group having 8 to 10 carbon atoms and a glycidyl group, such as 2-ethylhexyl glycidyl ether, ethers composed of a glycidyl group and a phenyl group having 6 to 12 carbon atoms that may be substituted with an alkyl group having 2 to 8 carbon atoms, such as p-tert-buthylphenyl glycidyl ether, ethers composed of an alkyl group having 12 to 14 carbon atoms and a glycidyl group, such as dodecyl glycidyl ether; aliphatic glycidyl esters such as glycidyl (meth)acrylate and glycidyl maleate; glycidyl esters of aliphatic carboxylic acids having 8 to 12 carbon atoms, such as glycidyl versatate, glycidyl neodecanoate, and glycidyl laurate; and glycidyl p-t-butylbenzoate.

When a monoepoxide is used, an amount of the monoepoxide to be used is preferably 0.1 to 20 parts by mass, more preferably 0.5 to 10 parts by mass, and particularly preferably 1 to 5 parts by mass, per 100 parts by mass of the flexible epoxy resin (A). If it is less than 0.1 parts by mass, the effect of lowering viscosity may not be sufficient, and if it is more than 20 parts by mass, physical properties such as adhesion properties may deteriorate.

<Silane Coupling Agent>

A silane coupling agent may be added to the curable composition of the present invention as needed. Such addition of the silane coupling agent can improve the adhesion. Specifically, as the silane coupling agent, there can be used isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, (isocyanatomethyl)dimethoxymethylsilane, (isocyanatomethyl)triethoxysilane, and (isocyanatomethyl)diethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and N, N'- bis[3-(trimethoxysilyl)propyl]ethylenediamine; ketimine type silanes such as N-(1,3-dimethylbutylidene)-3-(triethoxysilyl)-1-propeneamine; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3, 4-epoxycyclohexyl)ethyltriethoxysilane; carboxysilanes such as β-carboxyethyltriethoxysilane, β-carboxyethylphenylbis(2-methoxyethoxy) silane, and N-β-(carboxymethyl)aminoethyl-γ-aminopropyltrimethoxysilane; vinyl type unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; isocyanurate silanes such as tris(3-trimethoxysilylpropyl)isocyanurate, and the like. The reaction product of the silane coupling agent includes a reaction product of an aminosilane and an epoxysilane, a reaction product of an aminosilane and an isocyanatosilane, and a partial condensate of various kinds of silane coupling agents.

When the silane coupling agent is used, the amount used of the silane coupling agent is preferably about 0.1 to 15 parts by mass, more preferably 0.5 to 10 parts by mass, and particularly preferably about 1 to 5 parts by mass per 100 parts by mass of the flexible epoxy resin (A). If the amount added is below this range, there are cases where the adhesiveness of the curable composition are not sufficient. On the other hand, if the amount added exceeds this range, the strength of the cured product may decrease in some cases.

<Other Blending Components>

In the present invention, other blending components may be used, if necessary. Example of other blending components include blowing agents (e.g., an azo type chemical blowing agent and thermally expandable microballoons), fiber pulps (e.g., an aramid-based pulp), colorants (e.g., a pigment and a dye), extender pigments, UV absorbers, antioxidants, radically curable resins, photopolymerization initiators, stabilizers (an antigelling agent), plasticizers, leveling agents, antifoamers, antistatic agents, flame retardants, lubricants, viscosity reducers, low shrinkage agents, organic fillers, thermoplastic resins, desiccants, and dispersants.

<Method for preparing curable composition>

The curable composition of the present invention is a composition containing polymer fine particles (B) in the curable composition containing the flexible epoxy resin (A) as a resin main component, that is, the flexible epoxy resin (A) in an amount of 50 % by mass or more per 100 % by mass of the resin. The curable composition is preferably a composition in which the polymer fine particles (B) are dispersed at the state of primary particles.

Various methods can be used as a method of obtaining a composition in which polymer fine particles (B) are dispersed in the state of primary particles in the flexible epoxy resin (A). For example, such a method includes a method of bringing polymer fine particles obtained in the state of an aqueous latex, into contact with the flexible epoxy resin (A) and then removing unnecessary components such as water and the like, and a method of once extracting polymer fine particles with an organic solvent and then mixing the extract with the flexible epoxy resin (A) to remove the organic solvent. However, it is preferred to use the method described in WO 2005/028546. Specifically, such a method includes a first step of mixing an aqueous latex containing polymer fine particles (B) (in particular, a reaction mixture after production of the polymer fine particles by emulsion polymerization) with an organic solvent having a solubility of 5% by mass or more and 40% by mass or less in water at 20°C and further mixing the mixture with an excess of water to agglomerate the polymer fine particles; a second step of separating and collecting the agglomerated polymer fine particles (B) from the liquid phase and mixing the polymer fine particles with an organic solvent again to obtain an organic solvent solution containing the polymer fine particles (B); and a third step of further mixing the organic solvent solution with the flexible epoxy resin (A) and then distilling off the organic solvent, and this method is preferably used for the preparation of the composition.

The flexible epoxy resin (A) is preferably a liquid at 23°C because the third step is easily performed. The term "liquid at 23°C" means that the softening point is 23°C or less and means that the flexible epoxy resin (A) has a fluidity at 23°C.

By additionally mixing the flexible epoxy resin (A), the epoxy curing agent (C), and one or more components selected from the above-described other components according to necessity to the composition obtained via the above-described steps, in which the polymer fine particles (B) are dispersed in a primary particle state in the flexible epoxy resin (A), a curable composition of the present invention in which the polymer fine particles (B) are dispersed in a primary particle state is obtained.

On the other hand, powdery polymer fine particles (B) obtained by coagulation by salting out or the like and drying can be redispersed in the flexible epoxy resin (A) using a disperser having high mechanical shearing force such as a three paint roll, a roll mill or a kneader. At this time, a mechanical shearing force at high temperature is applied to the flexible epoxy resin (A) and the polymer fine particles (B), whereby the polymer fine particles (B) can be efficiently dispersed. The temperature for dispersing is preferably from 50 to 200°C, more preferably from 70 to 170°C, even preferably from 80 to 150°C, and particularly preferably from 90 to 120°C. When the temperature is lower than 50°C, the polymer fine particles (B) may not be sufficiently dispersed. When the temperature is higher than 200°C, the flexible epoxy resin (A) or the polymer fine particles (B) may be thermally degraded.

The curable composition of the present invention is tightly stored after all blending components have been previously blended, and may be used as a one-pack type curable composition which is cured by heating or light irradiation after coating. Further, a two-pack type or multi-pack type curable composition is prepared, wherein the composition contains a liquid A which contains the flexible epoxy resin (A) as a main component and further contains the polymer fine particles (B), and a separately prepared liquid B which contains the epoxy curing agent (C) and the curing accelerator, and further contains the polymer fine particles (B), if necessary. The liquid A and the liquid B may be mixed before use and the mixture may be used as the curable composition.

The polymer fine particles (B) and the epoxy curing agent (C) may be contained in at least either one of the liquid A and the liquid B, respectively. For example, these components may be contained in only the liquid A or in only the liquid B, or may be contained in both the liquid A and the liquid B.

(Cured product)

In the present invention, a cured product produced by curing the curable composition is included. In the case of a curable composition in which the polymer fine particles are dispersed in the form of primary particles, a cured product in which the polymer fine particles are dispersed homogeneously can be produced readily by curing the curable composition. In this case, since the polymer fine particles are hardly swelled and the viscosity of the curable composition is low, the cured product can be produced with good workability.

(Method for application)

The curable composition according to the present invention can be applied by any method. The curable composition can be applied at a temperature as low as room temperature, and can also be applied while being heated if necessary. The curable composition according to the present invention may be extruded in a bead-like, monofilament-like or swirl-like form on a substrate using an application robot, or may be applied employing a mechanical application method using a caulking gun or the like or other manual application means. Alternatively, the composition may be applied onto a substrate by a jet spray method or a streaming method. The curable composition according to the present invention is applied onto one or both of two substrates and the substrates are brought into contact with each other in such a manner that the composition is arranged between the substrates to be bonded each other, and then the curable composition is cured to bond the substrates each other. The viscosity of the curable composition is not particularly limited, and the viscosity of the curable composition in the extruded bead method is preferably 150 to 600 Pa•s at 45 °C, and the viscosity of the curable composition in the swirl coating method is preferably 100 Pa•s at 45 °C, and the viscosity of the curable composition in method for coating the composition at high volume using the high speed flow device is preferably 20 to 400 Pa•s at 45 °C.

<Laminate containing Bonded Substrate>

When various substrates are adhered to each other using the composition of the present invention, for example, wood, metal, plastic, and glass can be bonded. Preferably, steel plates (e.g., a cold-rolled steel plate and a hot-dip galvanized steel plate), aluminum alloy plates (e.g., an aluminum alloy and a coated aluminum alloy), a titanium alloy plate, a magnesium alloy plate, and various plastic-based substrates such as a resin plate such as a general-purpose plastic, an engineering plastic, composite substrates such as a carbon fiber reinforced plastic (CFRP), and a glass fiber reinforced plastic (GFRP) can be bonded. These substrates may be formed of different materials. Since the curable composition of the present invention is excellent in elongation properties, the curable composition is suitable for bonding between different kinds of substrates having different linear expansion coefficients.

In the case of bonding substrates using the curable composition of the present invention, it is preferable to join automobile parts, is more preferable to join automobile frames to each other or join automobile frames to other automobile parts, and it is still more preferable to produce an exterior panel by the joining technique.

The curable composition of the present invention may also be used to join aerospace components, particularly, exterior metal components (exterior panels).

<Curing Temperature>

The curing temperature of the curable composition of the present invention is not particularly limited. When the curable composition is used as a one-pack type curable composition, the curing temperature is preferably from 50°C to 250°C, more preferably from 80°C to 220°C, even preferably from 100°C to 200°C, and particularly preferably from 130°C to 180°C. When the curable composition is used as a two-pack type curable composition, the curing temperature is not particularly limited, and it is preferably from 0°C to 150°C, more preferably from 10°C to 100°C, still more preferably from 15°C to 80°C, and particularly preferably from 20°C to 60°C.

When the curable composition of the present invention is used as an automotive adhesive, it is preferable to perform a process of applying the adhesive to the automobile member, applying coating thereto, and baking and curing the coating simultaneously with curing the adhesive, from the viewpoint of shortening and simplifying the step.

The curable composition of the present invention is cured in two stages, which is preferred from the viewpoint of shortening and simplifying the step. In other words, preferably, the curable composition is heated to 80°C to 130°C for a short period of time (e.g., about 0.5 to 5 minutes) to partially cure adhered substrates to such an extent that the adhered substrates can be temporarily bonded, the cured substrates are heated at 130°C to 200°C for a long time (e.g., 10 minutes or more) in a subsequent step, and the curing is completed.

<Use>

The curable composition of the present invention is preferably used for structural adhesives for vehicles and aircrafts; adhesives such as structural adhesives for wind power generation; coating materials, materials for glass fiber lamination, and materials for printed wiring board; electrically insulating materials such as solder resist, interlayer insulating films, build-up materials, adhesives for FPC, and sealing materials for electronic components (e.g., semiconductors and LEDs); die-bonding materials; semiconductor packaging materials such as underfill, ACF, ACP, NCF, and NCP; sealing materials for display and lighting devices such as liquid crystal panel, OLED lighting, and OLED display. In particular, the curable composition is useful as a structural adhesive for vehicles.

The present application claims the benefit of priority to Japanese Patent Application Number 2016-079836 filed on April 12, 2016. The entire contents of the specification of Japanese Patent Application Number 2016-079836 filed on April 12, 2016 are hereby incorporated by reference.

EXAMPLES

Next, the present invention will be described in detail with reference to Examples and Comparative Example, but the present invention is not limited thereto, and the variation and the modification of the present invention without departing the gist described above and below are all included the technical scope of the present invention. In the following Examples and Comparative Examples, "part(s)" and "%" mean "part(s) by mass" and "% by mass", respectively.

Evaluation Method

First, the evaluation method of the curable composition produced by Examples and Comparative Examples will be described below.

[1] Measurement of volume average particle diameter

The volume average particle diameters (Mv) of the polymer fine particles dispersing in the aqueous latex were determined using Microtrac UPA 150 (manufactured by Nikkiso Co., Ltd.). A solution prepared by diluting the aqueous latex with deionized water was used as a measurement sample. The measurement was carried out in such a manner that the refractive index of water and the refractive index of each of a polymer fine particle were input, the time of measurement was 600 seconds, and the concentration of the sample was adjusted so that the signal level fell within the range from 0.6 to 0.8.

[2] Calculation of glass transition temperature of core layer of polymer fine particles (B)

In the curable composition, the glass transition temperature of the core layer of the polymer fine particles was determined by calculating a value of Kelvin temperature according to the numerical formula (1) and converting the value of Kelvin temperature to a value of Celsius temperature. Tg of the homopolymer composed of each non-crosslinking monomer unit was as follows: methylmethacrylate 378 K, butylacrylate 219 K, butylmethacrylate 293 K, butadiene 188 K, styrene 373 K.

$$1/Tg = \Sigma (M_i/Tg_i) \qquad (1)$$

wherein $M_i$ represents a mass fraction of a monomer unit i selected from butadiene unit and a non-crosslinking monomer unit constituting the core layer of the polymer fine particles (B), and $Tg_i$ represents a glass transition temperature (K) of a homopolymer composed of the monomer unit i.

[3] Measurement of viscosity

The viscosity of the curable composition was measured using a digital viscometer model DV-II+Pro (a product by Brookfield Engineering Laboratories, Inc.). A spindle CPE-41 or CPE-52 was used, and the viscosity was measured at a measurement temperature of 50 °C or 25 °C and at a shear rate of 10 ($s^{-1}$).

[4] Measurement of Tensile Properties of Cured Products

The curable composition was poured between two Teflon (registered trademark) coated steel plates sandwiching a 3 mm thick spacer, and cured at the temperature and time described below to obtain a cured plate having a thickness of 3 mm. This cured plate was punched through a No. 3 dumbbell mold and subjected to a tensile test at 23°C and a pulling rate of 200 mm/min in accordance with JIS K-6251. Then, the stress (M 100) (MPa) at 100% elongation, the maximum tensile stress (Tmax) (MPa), and the elongation (Emax) (%) at maximum tensile stress were measured.

[5] Measurement of Durometer Hardness of Cured Product

Two cured plates having a thickness of 3 mm prepared in [4] as described above were stacked, and the durometer hardness was measured at 23°C using a type A testing machine in accordance with JIS K-6253.

1. Preparation of polymer fine particles (B)

Production Example 1-1; preparation of core-shell polymer latex (L-1)

Into a glass reactor equipped with a thermometer, a stirrer, a reflux condenser, a nitrogen inlet, an apparatus for adding auxiliary raw materials including monomers and an emulsifying agent, 181 parts by mass of deionized water, 0.006 parts by mass of disodium ethylenediaminetetraacetate (EDTA), 0.0015 parts by mass of ferrous sulfate heptahydrate (FE), 0.6 parts by mass of sodium formaldehydesulfoxylate, and 0.01 parts by mass of sodium dodecylbenzenesulfonate (SDS) were charged, a temperature was increased to 60 °C while stirring under the stream of the nitrogen.

Then, a mixture containing 87 parts by mass of methylmethacrylate (MMA), 0.4 parts by mass of allylmethacrylate (ALMA) as monomers for forming the core layer, 0.13 parts by mass of cumene hydroperoxide (CHP) was dropped thereto over three hours. Additionally, at the time where the mixture containing monomers was added, 20 parts by mass of 5% SDS solution was continuously added over three hours. The stirring of the system was continued for 1 hour after the completion of the addition of the monomer mixture to complete the polymerization, thereby producing a latex contained acrylic polymer fine particles. Subsequently, a mixture of a graft monomer (3 parts by mass of MMA, 10 parts by mass of butylacrylate (BA) and 0.07 parts by mass of cumene hydroperoxide (CHP) was continuously added over 2 hours. After the completion of the addition, 0.07 parts by mass of cumene hydroperoxide (CHP) was added, the mixture was further stirred for 2 hours to complete the polymerization and a latex (L-1) of a core-shell polymer (B-1) was obtained. The polymerized conversion rate was 99 % or more. The volume average particle diameter of the core-shell polymer contained in the resulting latex was 0.36 μm.

Production Example 1-2: preparation of core-shell polymer latex (L-2)

The same procedure as in Production Example 1-1 was carried out, except that 2 parts by mass of MMA, 10 parts by mass of BA, 1 part by mass of glycidyl methacrylate (GMA) were used in place of 3 parts by mass of MMA, 10 parts by mass of BA as graft monomers. In this manner, core-shell polymer-containing aqueous latex (L-2) was produced. The core-shell polymer contained in the aqueous latex had a volume average particle diameter of 0.36 μm.

Production Example 1-3: preparation of core-shell polymer latex (L-3)

The same procedure as in Production Example 1-1 was carried out, except that 87 parts by mass of MMA, 4 parts by mass of ALMA were used in place of 87 parts by mass of MMA and 0.4 parts by mass of ALMA as monomers for forming the core layer, and 2 parts by mass of MMA, 10 parts by mass of BA, 1 part by mass of GMA were used in place of 3 parts by mass of MMA, 10 parts by mass of BA as graft monomers. In this manner, core-shell polymer-containing aqueous latex (L-3) was produced. The core-shell polymer contained in the aqueous latex had a volume average particle diameter of 0.35 μm.

Production Example 1-4: preparation of core-shell polymer latex (L-4)

The same procedure as in Production Example 1-1 was carried out, except that 72 parts by mass of MMA, 15 parts by mass of BA, 4 parts by mass of ALMA were used in place of 87 parts by mass of MMA and 0.4 parts by mass of ALMA as monomers for forming the core layer, and 2 parts by mass of MMA, 10 parts by mass of BA, 1 part by mass of GMA were used in place of 3 parts by mass of MMA, 10 parts by mass of BA as graft monomers. In this manner, core-shell polymer-containing aqueous latex (L-4) was produced. The core-shell polymer contained in the aqueous latex had a volume average particle diameter of 0.31 μm.

Production Example 1-5: preparation of core-shell polymer latex (L-5)

The same procedure as in Production Example 1-1 was carried out, except that 57 parts by mass of MMA, 30 parts by mass of BA, 4 parts by mass of ALMA were used in place of 87 parts by mass of MMA and 0.4 parts by mass of ALMA as monomers for forming the core layer, and 2 parts by mass of MMA, 10 parts by mass of BA, 1 part by mass of GMA were used in place of 3 parts by mass of MMA, 10 parts by mass of BA as graft monomers. In this manner, core-shell polymer-containing aqueous latex (L-5) was produced. The core-shell polymer contained in the aqueous latex had a volume average particle diameter of 0.35 μm.

Production Example 1-6: preparation of core-shell polymer latex (L-6)

The same procedure as in Production Example 1-1 was carried out, except that 57 parts by mass of MMA, 30 parts by mass of BA, 4 parts by mass of ALMA were used in place of 87 parts by mass of MMA and 0.4 parts by mass of ALMA as monomers for forming the core layer. In this manner, core-shell polymer-containing aqueous latex (L-6) was produced. The core-shell polymer contained in the aqueous latex had a volume average particle diameter of 0.37 μm.

Production Example 1-7: preparation of core-shell polymer latex (L-7)

The same procedure as in Production Example 1-1 was carried out, except that 57 parts by mass of MMA, 30 parts by mass of BA, 4 parts by mass of ALMA were used in place of 87 parts by mass of MMA and 0.4 parts by mass of ALMA as monomers for forming the core layer, and 1 part by mass of MMA, 10 parts by mass of BA, 2 parts by mass of GMA were used in place of 3 parts by mass of MMA, 10 parts by mass of BA as graft monomers. In this manner, core-shell polymer-containing aqueous latex (L-7) was produced. The core-shell polymer contained in the aqueous latex had a volume average particle diameter of 0.35 μm.

Production Example 1-8: preparation of core-shell polymer latex (L-8)

The same procedure as in Production Example 1-1 was carried out, except that 0.01 parts by mass of SDS to be initially added was changed to 0.4 parts by mass of SDS, 68.7 parts by mass of MMA, 14.3 parts by mass of BA, 4 parts by mass of ALMA were used in place of 87 parts by mass of MMA and 0.4 parts by mass of ALMA as monomers for forming the core layer, and 2.6 parts by mass of MMA, 13.1 parts by mass of BA, 1.3 parts by mass of GMA were used in place of 3 parts by mass of MMA, 10 parts by mass of BA as graft monomers. In this manner, core-shell polymer-containing aqueous latex (L-8) was produced. The core-shell polymer contained in the aqueous latex had a volume average particle diameter of 0.09 μm.

Production Example 1-9: preparation of core-shell polymer latex (L-9)

The same procedure as in Production Example 1-1 was carried out, except that 0.01 parts by mass of SDS to be initially added was changed to 0.4 parts by mass of SDS, 66.2 parts by mass of MMA, 13.8 parts by mass of BA, 4 parts by mass of ALMA were used in place of 87 parts by mass of MMA and 0.4 parts by mass of ALMA as monomers for forming the core layer, and 3.1 parts by mass of MMA, 15.4 parts by mass of BA, 1.5 parts by mass of GMA were used in place of 3 parts by mass of MMA, 10 parts by mass of BA as graft monomers. In this manner, core-shell polymer-containing aqueous latex (L-9) was produced. The core-shell polymer contained in the aqueous latex had a volume average particle diameter of 0.10 μm.

Production Example 1-10: preparation of core-shell polymer latex (L-10)

The same procedure as in Production Example 1-1 was carried out, except that 0.01 parts by mass of SDS to be initially added was changed to 0.4 parts by mass of SDS, 63.7 parts by mass of MMA, 13.3 parts by mass of BA, 4 parts by mass of ALMA were used in place of 87 parts by mass of MMA and 0.4 parts by mass of ALMA as monomers for forming the core layer, and 3.5 parts by mass of MMA, 17.7 parts by mass of BA, 1.8 parts by mass of GMA were used in place of 3 parts by mass of MMA, 10 parts by mass of BA as graft monomers. In this manner, core-shell polymer-containing aqueous latex (L-10) was produced. The core-shell polymer contained in the aqueous latex had a volume average particle diameter of 0.09 μm.

Production Example 1-11: preparation of core-shell polymer latex (L-11)

The same procedure as in Production Example 1-1 was carried out, except that 0.01 parts by mass of SDS to be initially added was changed to 0.4 parts by mass of SDS, 61.2 parts by mass of MMA, 12.8 parts by mass of BA, 4 parts by mass of ALMA were used in place of 87 parts by mass of MMA and 0.4 parts by mass of ALMA as monomers for forming the core layer, and 4 parts by mass of MMA, 20 parts by mass of BA, 2 parts by mass of GMA were used in place of 3 parts by mass of MMA, 10 parts by mass of BA as graft monomers. In this manner, core-shell polymer-containing aqueous latex (L-11) was produced. The core-shell polymer contained in the aqueous latex had a volume average particle diameter of 0.10 μm.

Production Example 1-12: preparation of core-shell polymer latex (L-12)

The same procedure as in Production Example 1-1 was carried out, except that 0.01 parts by mass of SDS to be initially added was changed to 0.4 parts by mass of SDS, 52.4 parts by mass of MMA, 27.6 parts by mass of BA, 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-12) was produced. The core-shell polymer contained in the aqueous latex had a volume average particle diameter of 0.08 μm.

Production Example 1-13: preparation of core-shell polymer latex (L-13)

The same procedure as in Production Example 1-1 was carried out, except that 0.01 parts by mass of SDS to be initially added was changed to 1.5 parts by mass of SDS, 52.4 parts by mass of MMA, 27.6 parts by mass of BA, 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-13) was produced. The core-shell polymer contained in the aqueous latex had a volume average particle diameter of 0.06 $\mu$m.

Production Example 1-14: preparation of core-shell polymer latex (L-14)

The same procedure as in Production Example 1-1 was carried out, except that 0.01 parts by mass of SDS to be initially added was changed to 3.0 parts by mass of SDS, 52.4 parts by mass of MMA, 27.6 parts by mass of BA, 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-14) was produced. The core-shell polymer contained in the aqueous latex had a volume average particle diameter of 0.05 $\mu$m.

Production Example 1-15: preparation of core-shell polymer latex (L-15)

The same procedure as in Production Example 1-1 was carried out, except that 0.01 parts by mass of SDS to be initially added was changed to 0.4 parts by mass of SDS, 52.4 parts by mass of MMA, 27.6 parts by mass of butylmethacrylate (BMA), 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-15) was produced. The core-shell polymer contained in the aqueous latex had a volume average particle diameter of 0.08 $\mu$m.

Production Example 1-16: preparation of core-shell polymer latex (L-16)

The same procedure as in Production Example 1-1 was carried out, except that 0.01 parts by mass of SDS to be initially added was changed to 0.4 parts by mass of SDS, 52.4 parts by mass of MMA, 27.6 parts by mass of BMA, 4 parts by mass of ALMA were used in place of 87 parts by mass of MMA and 0.4 parts by mass of ALMA as monomers for forming the core layer, and 3 parts by mass of MMA, 15.5 parts by mass of BMA, 1.5 parts by mass of GMA were used in place of 3 parts by mass of MMA, 10 parts by mass of BA as graft monomers. In this manner, core-shell polymer-containing aqueous latex (L-16) was produced. The core-shell polymer contained in the aqueous latex had a volume average particle diameter of 0.08 $\mu$m.

Production Example 1-17: preparation of core-shell polymer latex (L-17)

The same procedure as in Production Example 1-1 was carried out, except that 0.01 parts by mass of SDS to be initially added was changed to 0.4 parts by mass of SDS, 38 parts by mass of MMA, 42 parts by mass of BA, 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-17) was produced. The core-shell polymer contained in the aqueous latex had a volume average particle diameter of 0.09 $\mu$m.

Production Example 1-18: preparation of core-shell polymer latex (L-18)

The same procedure as in Production Example 1-1 was carried out, except that 0.01 parts by mass of SDS to be initially added was changed to 0.4 parts by mass of SDS, 17.5 parts by mass of MMA, 62.5 parts by mass of BA, 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-18) was produced. The core-shell polymer contained in the aqueous latex had a volume average particle diameter of 0.08 $\mu$m.

Production Example 1-19: preparation of core-shell polymer latex (L-19)

The same procedure as in Production Example 1-1 was carried out, except that 0.01 parts by mass of SDS to be initially added was changed to 0.4 parts by mass of SDS, 80 parts by mass of BA, 4 parts by mass of ALMA were used in place of 87 parts by mass of MMA and 0.4 parts by mass of ALMA as monomers for forming the core layer, and 3 parts by mass of MMA, 15.5 parts by mass of BA, 1.5 parts by mass of GMA were used in place of 3 parts by mass of MMA, 10 parts by mass of BA as graft monomers. In this manner, core-shell polymer-containing aqueous latex (L-19) was produced. The core-shell polymer contained in the aqueous latex had a volume average particle diameter of 0.08 $\mu$m.

Production Example 1-20: preparation of core-shell polymer latex (L-20)

Into a pressure resistant polymerization reactor, 200 parts by mass of deionized water, 0.03 parts by mass of tripotassium phosphate, 0.002 parts by mass of disodium ethylenediaminetetraacetate (EDTA), 0.001 parts by mass of ferrous sulfate heptahydrate (FE) and 1.55 parts by mass of sodium dodecylbenzenesulfonate (SDS) were charged, and stirred while sufficient nitrogen purge was performed to remove oxygen. Then, 100 parts by mass of butadiene (BD) was fed to the system, and the mixture was heated to 45°C. To this, 0.03 parts by mass of paramenthane hydroperoxide (PHP) and subsequently 0.10 parts by mass of sodium formaldehyde sulfoxylate (SFS) were added to initiate polymerization. 0.025 parts by mass of PHP was charged at the time of 3, 5, 7 hours from the start of the polymerization. Additionally, 0.0006 parts by mass of EDTA, 0.003 parts by mass of FE were charged at the time of 4, 6, 8 hours from the start of the polymerization. At the time of 15 hours from the start of the polymerization, remaining monomers were distilled off and removed under reduced pressure to stop the polymerization, so that a latex (R-1) containing polybutadiene rubber particles containing polybutadiene as a main component was obtained. The volume average particle diameter of the polybutadiene rubber particles contained in the resulting latex was 0.08 $\mu$m.

Into a glass reactor equipped with a thermometer, a stirrer, a reflux condenser, a nitrogen inlet, an apparatus for adding auxiliary raw materials including monomers, 255 parts by mass of the polybutadiene rubber latex (R-1) (corresponding to 85 parts by mass of polybutadiene rubber particles) and 30 parts by mass of deionized water were charged, and stirred at 60°C while nitrogen purge was performed. After 0.004 parts by mass of EDTA, 0.001 parts by mass of FE, and 0.3 parts by mass of SFS were added, graft polymerization was performed by adding a mixture of a graft monomer (4.5 parts by mass of methyl methacrylate (MMA), 9 parts by mass of butylacrylate (BA), 1.5 parts by mass of glycidyl methacrylate (GMA)) and 0.2 parts by mass of cumene hydroperoxide (CHP) continuously over 2 hours. After the completion of the addition, 0.07 parts by mass of cumene hydroperoxide (CHP) was added, the mixture was further stirred for 2 hours to complete the polymerization and an aqueous latex (L-20) of a core-shell polymer was obtained. The polymerized conversion rate was 99 % or more. The volume average particle diameter of the core-shell polymer contained in the resulting latex was 0.09 $\mu$m.

Production Example 1-21: preparation of core-shell polymer latex (L-21)

The same procedure as in Production Example 1-20 was carried out, except that 75 parts by mass of BD and 25 parts by mass of styrene (ST) were charged to the system in place of 100 parts by mass of BD. In this manner, styrene-butadiene rubber latex (R-2) was produced. The styrene-butadiene rubber particles contained in the aqueous latex had a volume average particle diameter of 0.08 $\mu$m.

Then, the same procedure as Production Example 1-20 was carried out except that 255 parts by mass of styrene-butadiene rubber latex (R-2) (containing 85 parts by mass of styrene-butadiene rubber particles) was charge in place of 255 parts by mass of the polybutadiene rubber latex (R-1) (containing 85 parts by mass of polybutadiene rubber particles), graft polymerization was performed by adding a mixture of a graft monomer (4.5 parts by mass of MMA, 9 parts by mass of BA, 1.5 parts by mass of GMA). An aqueous latex (L-21) of a core-shell polymer was obtained. The volume average particle diameter of the core-shell polymer contained in the resulting latex was 0.09 $\mu$m.

Production Example 1-22: preparation of core-shell polymer latex (L-22)

Into a pressure resistant polymerization reactor, 21 parts by mass of polybutadiene rubber latex (R-1) obtained in Production Example 1-20 (corresponding to 7 parts by mass of polybutadiene rubber), 186 parts by mass of deionized water, 0.03 parts by mass of tripotassium phosphate, 0.002 parts by mass of EDTA, 0.001 parts by mass of FE were charged, and stirred while sufficient nitrogen purge was performed to remove oxygen. Then, 93 parts by mass of BD was fed to the system, and the mixture was heated to 45°C. To this, 0.02 parts by mass of PHP and subsequently 0.10 parts by mass of sodium formaldehyde sulfoxylate (SFS) were added to initiate polymerization. Additionally, 0.025 parts by mass of PHP, 0.0006 parts by mass of EDTA, 0.003 parts by mass of FE were charged at every three hours from the start of the polymerization to 24 hours. At the time of 30 hours from the start of the polymerization, remaining monomers were distilled off and removed under reduced pressure to stop the polymerization, so that a latex (R-3) containing polybutadiene rubber particles containing polybutadiene as a main component was obtained. The volume average particle diameter of the polybutadiene rubber particles contained in the resulting latex was 0.20 μm.

Into a glass reactor equipped with a thermometer, a stirrer, a reflux condenser, a nitrogen inlet, an apparatus for adding auxiliary raw materials including monomers, 270 parts by mass of the polybutadiene rubber latex (R-3) (corresponding to 90 parts by mass of polybutadiene rubber particles) and 20 parts by mass of deionized water were charged, and stirred at 60°C while nitrogen purge was performed. After 0.0024 parts by mass of EDTA, 0.0006 parts by mass of FE, and 0.2 parts by mass of SFS were added, graft polymerization was performed by adding a mixture of a graft monomer (4 parts by mass of MMA, 6 parts by mass of BA) and 0.14 parts by mass of CHP continuously over 80 minutes. After the completion of the addition, 0.07 parts by mass of CHP was added, the mixture was further stirred for 2 hours to complete the polymerization and an aqueous latex (L-22) of a core-shell polymer was obtained. The polymerized conversion rate was 99 % or more. The volume average particle diameter of the core-shell polymer contained in the resulting latex was 0.21 μm.

Production Example 1-23: preparation of core-shell polymer latex (L-23)

The same procedure as in Production Example 1-22 was carried out, except that 3 parts by mass of MMA, 6 parts by mass of BA, 1 part by mass of GMA were used in place of 4 parts by mass of MMA, 6 parts by mass of BA as graft monomers. In this manner, core-shell polymer-containing aqueous latex (L-23) was produced. The core-shell polymer contained in the aqueous latex had a volume average particle diameter of 0.21 μm.

Production Example 1-24: preparation of core-shell polymer latex (L-24)

The same procedure as in Production Example 1-22 was carried out, except that 6 parts by mass of BA, 4 parts by mass of GMA were used in place of 4 parts by mass of MMA, 6 parts by mass of BA as graft monomers. In this manner, core-shell polymer-containing aqueous latex (L-24) was produced. The core-shell polymer contained in the aqueous latex had a volume average particle diameter of 0.21 μm.

2. Preparation of dispersion (M) in which polymer fine particles (B) are dispersed in curable composition

Production Example 2-1; preparation of dispersion (M-1)

Into a 1-L stirring tank kept at 25°C, 120 g of methyl ethyl ketone (MEK) was charged, and then 120 g (corresponding to 40 g of polymer fine particles) of the aqueous latex (L-1) of the core-shell polymer obtained in the above-described Production Example 2-1 was also charged under stirring. After mixing uniformly, 180 g of water was added at a feeding rate of 80 g/min. Immediately after the completion of the addition, stirring was stopped and thus a slurry composed of buoyant aggregates and an aqueous phase containing an organic solvent was obtained. Subsequently, 300 g of the aqueous phase was discharged through a discharge port at a lower portion of the tank while the aggregates containing some aqueous phase were left. To the resulting aggregates, 180 g of MEK was added and mixed uniformly to obtain a dispersion in which a core-shell polymer was dispersed uniformly. To this dispersion was mixed 80 g of a flexible epoxy resin (A-1: produced by Mitsubishi Chemical Corporation, JER 871: dimer acid modified epoxy resin, epoxy equivalent of 410 g/eq) as an epoxy resin (A). MEK was removed from the mixture by using a rotary evaporator. Thus, a dispersion (M-1) in which the polymer fine particles were dispersed in the flexible epoxy resin was obtained.

Production Examples 2-2 and 2-3; Preparation of dispersions (M-2 and M-3)

Dispersions (M-2 and M-3) in which the polymer fine particles were dispersed in the flexible epoxy resin were obtained in the same manner as Production Example 2-1 except that the aqueous latex (L-2) or the aqueous latex (L-3) obtained in Production Example 1-2 or 1-3 was used in place of the aqueous latex (L-1) of the core shell polymer.

Production Examples 2-4 to 2-13; Preparation of dispersions (M-4 to M-13)

Dispersions (M-4 to M-13) in which the polymer fine particles were dispersed in the flexible epoxy resin were obtained in the same manner as Production Example 2-1 except that the aqueous latexes (L-3) to (L-12) obtained in Production Examples 1-3 to 1-12 were used in place of the aqueous latex (L-1) of the core shell polymer, 60 g of the flexible epoxy resin (A-1) was used in place of 80 g of the flexible epoxy resin (A-1).

Production Example 2-14; Preparation of dispersion (M-14)

A dispersion (M-14) in which the polymer fine particles were dispersed in the flexible epoxy resin were obtained in the same manner as Production Example 2-1 except that the aqueous latex (L-12) obtained in Production Example 1-12 was used in place of the aqueous latex (L-1) of the core shell polymer, 40 g of the flexible epoxy resin (A-1) was used in place of 80 g of the flexible epoxy resin (A-1).

Production Examples 2-15 to 2-21, and 2-24 to 2-26; Preparation of dispersions (M-15 to M-21 and M-24 to M-26)

Dispersions (M-15 to M-21, and M-24 to M-26) in which the polymer fine particles were dispersed in the flexible epoxy resin were obtained in the same manner as Production Example 2-1 except that the aqueous latexes (L-13) to (L-19), and (L-22) to (L-24) obtained in Production Example 1-13 to 1-19, and 1-22 to 1-24 were used in place of the aqueous latex (L-1) of the core shell polymer, 60 g of the flexible epoxy resin (A-1) was used in place of 80 g of the flexible epoxy resin (A-1).

Production Examples 2-22 and 2-23; Preparation of dispersions (M-22 and M-23)

Dispersions (M-22 and M-23) in which the polymer fine particles were dispersed in the flexible epoxy resin were obtained in the same manner as Production Example 2-1 except that the aqueous latex (L-20) or the aqueous latex (L-21) obtained in Production Example 1-20 or 1-21 was used in place of the aqueous latex (L-1) of the core shell polymer.

Production Examples 2-27 to 2-30; Preparation of dispersions (M-27 to M-30)

Dispersions (M-27 to M-30) in which the polymer fine particles were dispersed in the flexible epoxy resin were obtained in the same manner as Production Example 2-1 except that the aqueous latexes (L-8) to (L-11) obtained in Production Examples 1-8 to 1-11 were used in place of the aqueous latex (L-1) of the core shell polymer, 60 g of the flexible epoxy resin (A-2; UG-4010: manufactured by Toagosei Co., Ltd., epoxy group-containing acrylic polymer, epoxy equivalent of 720 g/eq) was used in place of 80 g of the flexible epoxy resin (A-1).

Production Example 2-31; Preparation of dispersion (M-31)

A dispersion (M-31) in which the polymer fine particles were dispersed in the bisphenol A epoxy resin were obtained in the same manner as Production Example 2-1 except that the aqueous latex (L-4) obtained in Production Example 1-4 was used in place of the aqueous latex (L-1) of the core shell polymer, 60 g of bisphenol A epoxy resin (A-3; produced by Mitsubishi Chemical Corporation, JER 828, epoxy equivalent: 190 g/eq) was used in place of 80 g of the flexible epoxy resin (A-1).

Regarding the dispersions (M-1 to M-26) in which the polymer fine particles obtained in Production Examples 2-1 to 2-26 were dispersed, "amount (% by mass) of polymer fine particles (B) in dispersion (M)", "composition (parts by mass) of core layer of polymer fine particles (B)", "composition (parts by mass) of shell layer of polymer fine particles (B)", "particle diameter ($\mu$m) of polymer fine particles (B)", "Tg (°C) of core layer of polymer fine particles (B)", "amount (mmol/g) of epoxy group in shell layer of polymer fine particles (B)", and "viscosity (Pa·s) of dispersion (M) at 25°C or 50 °C" are shown in Table 1.

[Table 1]

| Production Example | Number of Dispersion (M) | Latex (L) used in preparation of Dispersion (M) | Amount of polymer fine particles (B) in Dispersion (M) (% by mass) | Composition of core layer (parts by mass) | | | | | | Composition of shell layer (parts by mass) | | | | Particle diameter (µm) | Core layer Tg (°C) | Amount of epoxy group of shell layer (mmol/g) | Viscosity (Pa·s) of Dispersion (M) | |
|---|---|---|---|---|---|---|---|---|---|---|---|---|---|---|---|---|---|---|
| | | | | MMA | BA | BMA | ALMA | BDI | St | MMA | BA | BMA | GMA | | | | <25°C> | <50°C> |
| Production Example 2-1 | M-1 | Production Example 1-1 / L-1 | 33 | 87 | | | 0.4 | | | 3 | 10 | | 0 | 0.36 | 105 | 0.00 | | 4.9 |
| Production Example 2-2 | M-2 | Production Example 1-2 / L-2 | 33 | 87 | | | 0.4 | | | 2 | 10 | | 1 | 0.36 | 105 | 0.54 | | 5.7 |
| Production Example 2-3 | M-3 | Production Example 1-3 / L-3 | 33 | 87 | | | 4 | | | 2 | 10 | | 1 | 0.35 | 105 | 0.54 | | 1.4 |
| Production Example 2-4 | M-4 | Production Example 1-3 / L-3 | 40 | 87 | | | 4 | | | 2 | 10 | | 1 | 0.35 | 105 | 0.54 | | 8.9 |
| Production Example 2-5 | M-5 | Production Example 1-4 / L-4 | 40 | 72 | 15 | | 4 | | | 2 | 10 | | 1 | 0.31 | 63 | 0.54 | | 1.3 |
| Production Example 2-6 | M-6 | Production Example 1-5 / L-5 | 40 | 57 | 30 | | 4 | | | 2 | 10 | | 1 | 0.35 | 29 | 0.54 | 3.1 | 0.8 |
| Production Example 2-7 | M-7 | Production Example 1-6 / L-6 | 40 | 57 | 30 | | 4 | | | 3 | 10 | | 0 | 0.37 | 29 | 0.00 | 4.0 | |
| Production Example 2-8 | M-8 | Production Example 1-7 / L-7 | 40 | 57 | 30 | | 4 | | | 1 | 10 | | 2 | 0.35 | 29 | 1.08 | 4.0 | |
| Production Example 2-9 | M-9 | Production Example 1-8 / L-8 | 40 | 68.7 | 14.3 | | 4 | | | 2.6 | 13.1 | | 1.3 | 0.09 | 63 | 0.54 | 22.9 | |
| Production Example 2-10 | M-10 | Production Example 1-9 / L-9 | 40 | 66.2 | 13.8 | | 4 | | | 3.1 | 15.4 | | 1.5 | 0.10 | 63 | 0.53 | 12.2 | |
| Production Example 2-11 | M-11 | Production Example 1-10 / L-10 | 40 | 63.7 | 13.3 | | 4 | | | 3.5 | 17.7 | | 1.8 | 0.09 | 63 | 0.55 | 8.1 | |
| Production Example 2-12 | M-12 | Production Example 1-11 / L-11 | 40 | 61.2 | 12.8 | | 4 | | | 4 | 20 | | 2 | 0.10 | 63 | 0.54 | 9.3 | |

(continued)

| Number of Dispersion (M) | | Latex (L) used in preparation of Dispersion (M) | | Amount of polymer fine particles (B) in Dispersion (M) | Polymer fine particles (B) | | | | | | | | | | | | Particle diameter | Core layer Tg | Amount of epoxy group of shell layer | Viscosity (Pa·s) of Dispersion (M) | |
|---|---|---|---|---|---|---|---|---|---|---|---|---|---|---|---|---|---|---|---|---|---|
| | | | | | Composition of core layer (parts by mass) | | | | | | Composition of shell layer (parts by mass) | | | | | | | | | | |
| | | | | (% by mass) | MMA | BA | BMA | ALMA | BDI | St | MMA | BA | BMA | GMA | (μm) | (°C) | (mmol/g) | <25°C> | <50°C> |
| Production Example2-13 | M-13 | Production Example1-12 | L-12 | 40 | 52.4 | 27.6 | | 4 | | | 3 | 15.5 | | 1.5 | 0.08 | 29 | 0.53 | 5.7 | 1.8 |
| Production Example2-14 | M-14 | Production Example1-12 | L-12 | 50 | 52.4 | 27.6 | | 4 | | | 3 | 15.5 | | 1.5 | 0.08 | 29 | 0.53 | | 8.4 |
| Production Example2-15 | M-15 | Production Example1-13 | L-13 | 40 | 52.4 | 27.6 | | 4 | | | 3 | 15.5 | | 1.5 | 0.06 | 29 | 0.53 | | 2.6 |
| Production Example2-16 | M-16 | Production Example1-14 | L-14 | 40 | 52.4 | 27.6 | | 4 | | | 3 | 15.5 | | 1.5 | 0.05 | 29 | 0.53 | | 3.9 |
| Production Example2-17 | M-17 | Production Example1-15 | L-15 | 40 | 52.4 | | 27.6 | 4 | | | 3 | 15.5 | | 1.5 | 0.08 | 71 | 0.53 | | 3.6 |
| Production Example2-18 | M-18 | Production Example1-16 | L-16 | 40 | 52.4 | | 27.6 | 4 | | | 3 | | 15.5 | 1.5 | 0.08 | 71 | 0.53 | | 28.3 |
| Production Example2-19 | M-19 | Production Example1-17 | L-17 | 40 | 38 | 42 | | 4 | | | 3 | 15.5 | | 1.5 | 0.09 | 1 | 0.53 | | 2.6 |
| Production Example2-20 | M-20 | Production Example1-18 | L-18 | 40 | 17.5 | 62.5 | | 4 | | | 3 | 15.5 | | 1.5 | 0.08 | -32 | 0.53 | | 7.6 |
| Production Example2-21 | M-21 | Production Example1-19 | L-19 | 40 | | 80 | | 4 | | | 3 | 15.5 | | 1.5 | 0.08 | -54 | 0.53 | | 25.2 |
| Production Example2-22 | M-22 | Production Example1-20 | L-20 | 33 | | | | | 85 | | 4.5 | 9 | | 1.5 | 0.09 | -85 | 0.70 | | 4.0 |
| Production Example2-23 | M-23 | Production Example1-21 | L-21 | 33 | | | | | 64 | 21 | 4.5 | 9 | | 1.5 | 0.09 | -59 | 0.70 | | 24.0 |
| Production Example2-24 | M-24 | Production Example1-22 | L-22 | 40 | | | | | 90 | | 4 | 6 | | 0 | 0.21 | -85 | 0.00 | | 6.5 |

(continued)

| Number of Dispersion (M) | | Latex (L) used in preparation of Dispersion (M) | Amount of polymer fine particles (B) in Dispersion (M) (% by mass) | Polymer fine particles (B) | | | | | | | | | | | | | | | |
|---|---|---|---|---|---|---|---|---|---|---|---|---|---|---|---|---|---|---|---|
| | | | | Composition of core layer (parts by mass) | | | | | | Composition of shell layer (parts by mass) | | | | Particle diameter (μm) | Core layer Tg (°C) | Amount of epoxy group of shell layer (mmol/g) | Viscosity (Pa·s) of Dispersion (M) | |
| | | | | MMA | BA | BMA | ALMA | BDI | St | MMA | BA | BMA | GMA | | | | <25°C> | <50°C> |
| Production Example2-25 | M-25 | Production Example1-23 L-23 | 40 | | | | | 90 | | 3 | 6 | | 1 | 0.21 | -85 | 0.70 | | 7.5 |
| Production Example2-26 | M-26 | Production Example1-24 L-24 | 40 | | | | | 90 | | 0 | 6 | | 4 | 0.21 | -85 | 2.81 | | 43.2 |

(Examples 1 to 21 and Comparative Examples 1 to 15)

According to the formulation shown in Table 2, the flexible epoxy resin (A-1; dimer acid-modified epoxy resin, JER 871: manufactured by Mitsubishi Chemical Corporation) as the component (A), the dispersions (M-1 to M-26) obtained in Production Examples 2-1 to 2-26 as the mixtures of flexible epoxy resin (A) and polymer fine particles (B), the epoxy curing agent (C-1; amino-terminated butadiene-acrylonitrile copolymer, Hypro 1300X16 ATBN: manufactured by CVC Thermoset Specialties) as the component (C), fumed silica (fumed silica surface-treated with polydimethylsiloxane, CAB-O-SIL TS-720: manufactured by CABOT Corporation), heavy calcium carbonate (Whiton SB, manufactured by Shiraishi Calcium Kaisha, Ltd.) were weighed and thoroughly mixed, and the resultant mixture was defoamed to obtain curable compositions. A cured product was obtained under the curing conditions at 23°C for 48 hours and at 80°C for 5 hours using this composition according to the above test method, and the tensile properties (stress at 100% elongation: M100, maximum tensile stress: Tmax, and elongation at maximum tensile stress: Emax) and the durometer hardness of the cured product were measured. The test results are shown in Tables 2 and 3.

To 100 parts by mass of the flexible epoxy resin (A-1) having an epoxy equivalent of 410 g/eq, 20.8 parts by mass of isophorone diamine were added and mixed. The resultant mixture was defoamed by centrifugation and poured into the mold so that air bubbles were not introduced. The mixture was cured at 23°C for 24 hours and further cured at 80°C for 40 hours to obtain a cured product sheet having a thickness of 6 mm. The durometer hardness of the sheet was measured at 23°C and 50% RH using a type A durometer hardness tester compliant with JIS K-6253, and the measured value was 65. The epoxy resin (A-1) used in Examples was considered to be "a flexible epoxy resin resulted in a cured product having rubber elasticity".

[Table 2]

| | Composition (parts by mass) | | | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shelllayer of polymer fine particles (B) | Tensile property of cured product | | | Durometer hardness of cured product |
| | Epoxy resin (A-1) | Dispersion(M) (containing epoxy resin (A-1) and polymer fine particles (B)) | | Epoxy curing agent (C-1) | Humed silica | Heavy calcium carbonate | | | | | M100 | Tmax | Emax | |
| | | | | ATBN | TS-720 | Whiton SB | (parts by mass) | (parts by mass) | (°C) | (mmol/g) | (MPa) | (MPa) | (%) | TypeA |
| Example 1 | | 150 | (M-1) | 117.7 | | | 50parts | 118parts | 105 | 0.00 | 0.7 | 3.0 | 405 | 50 |
| Example 2 | | 150 | (M-2) | 117.7 | | | 50parts | 118parts | 105 | 0.54 | 1.0 | 4.5 | 287 | 53 |
| Example 3 | | 150 | (M-3) | 117.7 | | | 50parts | 118parts | 105 | 0.54 | 0.8 | 3.8 | 366 | 42 |
| Example 4 | 50 | 83 | (M-4) | 117.7 | | | 33parts | 118parts | 105 | 0.54 | 0.8 | 4.0 | 336 | 42 |
| Example 5 | | 167 | (M-4) | 117.7 | | | 67parts | 118parts | 105 | 0.54 | 1.1 | 5.1 | 362 | 54 |
| Example 6 | | 167 | (M-5) | 117.7 | | | 67parts | 118parts | 63 | 0.54 | 1.3 | 5.9 | 308 | 53 |
| Example 7 | | 167 | (M-6) | 117.7 | | | 67parts | 118parts | 29 | 0.54 | 1.1 | 4.9 | 319 | 49 |
| Example 8 | | 150 | (M-3) | 117.7 | | 123.3 | 50parts | 118parts | 105 | 0.54 | 1.4 | 3.4 | 381 | 62 |
| Example 9 | | 167 | (M-7) | 117.7 | | | 67parts | 118parts | 29 | 0.00 | 0.8 | 3.1 | 406 | 51 |
| Example 10 | | 167 | (M-8) | 117.7 | | | 67parts | 118parts | 29 | 1.08 | 1.9 | 5.2 | 232 | 61 |

(continued)

| | Composition (parts by mass) | | | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shelllayer of polymer fine particles (B) | Tensile property of cured product | | | Durometer hardness of cured product |
| | Epoxy resin (A-1) | Dispersion(M) (containing epoxy resin (A-1) and polymer fine particles (B)) | | Epoxy curing agent (C-1) | Humed silica | Heavy calcium carbonate | | | | | M100 | Tmax | Emax | |
| | | | | ATBN | TS-720 | Whiton SB | (parts by mass) | (parts by mass) | (°C) | (mmol/g) | (MPa) | (MPa) | (%) | TypeA |
| Example 11 | | 167 | (M-9) | 117.7 | | | 67parts | 118parts | 63 | 0.54 | 1.1 | 5.8 | 303 | 55 |
| Example 12 | | 167 | (M-10) | 117.7 | | | 67parts | 118parts | 63 | 0.53 | 1.1 | 5.6 | 300 | 60 |
| Example 13 | | 167 | (M-11) | 117.7 | | | 67parts | 118parts | 63 | 0.55 | 1.2 | 5.3 | 280 | 59 |
| Example 14 | | 167 | (M-12) | 117.7 | | | 67parts | 118parts | 63 | 0.54 | 1.1 | 5.3 | 298 | 58 |
| Example 15 | | 167 | (M-13) | 117.7 | | | 67parts | 118parts | 29 | 0.53 | 1.3 | 6.1 | 325 | 60 |
| Example 16 | | 200 | (M-14) | 117.7 | | | 100parts | 118parts | 29 | 0.53 | 1.8 | 7.3 | 304 | 66 |
| Example 17 | | 167 | (M-15) | 117.7 | | | 67parts | 118parts | 29 | 0.53 | 0.9 | 3.7 | 335 | 58 |
| Example 18 | | 167 | (M-16) | 117.7 | | | 67parts | 118parts | 29 | 0.53 | 0.9 | 3.8 | 347 | 55 |
| Example 19 | | 167 | (M-17) | 117.7 | | | 67parts | 118parts | 71 | 0.53 | 1.0 | 5.7 | 354 | 56 |
| Example 20 | | 167 | (M-18) | 117.7 | | | 67parts | 118parts | 71 | 0.53 | 1.0 | 5.2 | 350 | 58 |

| | Composition (parts by mass) | | | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shelllayer of polymer fine particles (B) | Tensile property of cured product | | | Durometer hardness of cured product |
| | Epoxy resin (A-1) | Dispersion(M) (containing epoxy resin (A-1) and polymer fine particles (B)) | | Epoxy curing agent (C-1) | Humed silica | Heavy calcium carbonate | | | | | M100 | Tmax | Emax | |
| | | | | ATBN | TS-720 | Whiton SB | (parts by mass) | (parts by mass) | (°C) | (mmol/g) | (MPa) | (MPa) | (%) | TypeA |
| Example 21 | | 167 | (M-19) | 117.7 | | | 67parts | 118parts | 1 | 0.53 | 0.6 | 3.5 | 354 | 42 |

[Table 3]

| | Composition (parts by mass) | | | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | | Durometer hardness of cured product |
| | Epoxy resin (A-1) | Dispersion (M) (containing epoxy resin (A-1) and polymer fine particles (B)) | | Epoxy curing agent (C-1) | Humed silica | Heavy calcium carbonate | | | | | M100 | Tmax | Emax | |
| | | | | ATBN | TS-720 | WhitonSB | (parts by mass) | (parts by mass) | (°C) | (mmol/g) | (MPa) | (MPa) | (%) | TypeA |
| Comparative Example 1 | | 167 | (M-20) | 117.7 | | | 67parts | 118parts | -32 | 0.53 | 0.6 | 2.7 | 262 | 43 |
| Comparative Example 2 | | 167 | (M-21) | 117.7 | | | 67parts | 118parts | -54 | 0.53 | 0.6 | 2.9 | 250 | 46 |
| Comparative Example 3 | | 150 | (M-22) | 117.7 | | | 50parts | 118parts | -85 | 0.70 | 0.6 | 0.7 | 129 | 37 |
| Comparative Example 4 | | 150 | (M-23) | 117.7 | | | 50parts | 118parts | -59 | 0.70 | 0.6 | 0.7 | 127 | 37 |
| Comparative Example 5 | | 167 | (M-24) | 117.7 | | | 67parts | 118parts | -85 | 0.00 | 0.5 | 0.6 | 137 | 36 |
| Comparative Example 6 | | 167 | (M-25) | 117.7 | | | 67parts | 118parts | -85 | 0.70 | 0.7 | 0.9 | 145 | 40 |
| Comparative Example 7 | | 167 | (M-26) | 117.7 | | | 67parts | 118parts | -85 | 2.81 | 0.7 | 1.1 | 134 | 42 |
| Comparative Example 8 | 100 | | - | 117.7 | | | 0parts | 118parts | - | - | 0.4 | 0.6 | 180 | 35 |
| Comparative Example 9 | 100 | | - | 117.7 | 3 | | 0parts | 118parts | - | - | 0.4 | 0.9 | 247 | 30 |
| Comparative Example 10 | 100 | | - | 117.7 | 11 | | 0parts | 118parts | - | - | 0.5 | 1.8 | 288 | 43 |
| Comparative Example 11 | 100 | | - | 117.7 | 22 | | 0parts | 118parts | - | - | 0.8 | 2.7 | 291 | 50 |

| | Composition (parts by mass) | | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | | Durometer hardness of cured product |
|---|---|---|---|---|---|---|---|---|---|---|---|---|---|
| | Epoxy resin (A-1) | Dispersion (M) (containing epoxy resin (A-1) and polymer fine particles (B)) | Epoxy curing agent (C-1) | Humed silica | Heavy calcium carbonate | | | | | M100 | Tmax | Emax | |
| | | | ATBN | TS-720 | WhitonSB | (parts by mass) | (parts by mass) | (°C) | (mmol/g) | (MPa) | (MPa) | (%) | TypeA |
| Comparative Example 12 | 100 | - | 117.7 | | 123.3 | 0parts | 118parts | - | - | 0.8 | 2.2 | 338 | 47 |
| Comparative Example 13 | 100 | - | 117.7 | | 166.7 | 0parts | 118parts | - | - | 1.4 | 2.6 | 276 | 55 |
| Comparative Example 14 | 100 | - | 117.7 | | 250 | 0parts | 118parts | - | - | 1.9 | 2.7 | 286 | 61 |
| Comparative Example 15 | | 150 (M-22) | 117.7 | 3 | | 50parts | 118parts | -85 | 0.70 | 0.6 | 1.0 | 170 | 41 |

According to the result of Table 2, the cured product obtained by curing the curable composition of the present invention has rubber elasticity, high elongation, and high strength (maximum tensile stress). The amounts of the flexible epoxy resin (A) contained in the curable compositions of Tables 2 and 3 and Tables 4, 5, 7, and 8 to be described later were calculated by adding the amount of the component added as the epoxy resin and the amount of the component contained in the dispersion (M) of polymer fine particles.

(Examples 22 to 27 and Comparative Examples 16 and 17)

According to the formulation shown in Table 4, the flexible epoxy resin (A-1) as the component (A), the dispersions (M-4 to M-8, M-13, and M-24) obtained in Production Examples 2-4 to 2-8, 2-13, and 2-24 as the mixture of flexible epoxy resin (A) and polymer fine particles (B), and the epoxy curing agent (C-2; polyamide amine, Ancamide 2050: manufactured by Air Products and Chemicals, Inc.) as the component (C) were weighed and thoroughly mixed, and the resultant mixture was defoamed to obtain curable compositions. A cured product was obtained under the curing conditions at 23°C for 48 hours and 80°C for 5 hours using this composition according to the above test method, and the tensile properties (maximum tensile stress: Tmax and elongation at maximum tensile stress: Emax) and the durometer hardness of the cured product were measured. The test results are shown in Table 4.

[Table 4]

| | Composition (parts by mass) | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | Durometer hardness of cured product |
|---|---|---|---|---|---|---|---|---|---|---|---|
| | Epoxy resin (A-1) | Dispersion (M) in which polymer fine particles (B) are dispersed | | Epoxy curing agent (C-2) | | | | | Tmax | Emax | |
| | | | | Ancamide 2050 | (parts by mass) | (parts by mass) | (°C) | (mmol/g) | (MPa) | (%) | TypeA |
| Example 22 | | 167 | (M-4) | 32.4 | 67parts | 32parts | 105 | 0.54 | 1.6 | 31 | 71 |
| Example 23 | | 167 | (M-5) | 32.4 | 67parts | 32parts | 63 | 0.54 | 2.1 | 28 | 74 |
| Example 24 | | 167 | (M-6) | 32.4 | 67parts | 32parts | 29 | 0.54 | 2.2 | 34 | 74 |
| Example 25 | | 167 | (M-7) | 32.4 | 67parts | 32parts | 29 | 0.00 | 1.6 | 54 | 61 |
| Example 26 | | 167 | (M-8) | 32.4 | 67parts | 32parts | 29 | 1.08 | 2.4 | 29 | 75 |
| Example 27 | | 167 | (M-13) | 32.4 | 67parts | 32parts | 29 | 0.53 | 3.0 | 64 | 75 |
| Comparative Example 16 | | 167 | (M-24) | 32.4 | 67parts | 32parts | -85 | 0.00 | 0.4 | 18 | 39 |
| Comparative Example 17 | 100 | | - | 32.4 | 0parts | 32parts | - | - | 0.4 | 18 | 38 |

EP 3 444 301 B1

According to the results of Table 4, the cured product obtained by curing the curable composition of the present invention had rubber elasticity and high strength (maximum tensile stress).

(Examples 28 to 38 and Comparative Examples 18 and 19)

According to the formulation shown in Table 5, the flexible epoxy resin (A-1) as the component (A), the dispersions (M-5 to M-8, M-13, M-17, M-19, and M-21) obtained in Production Examples 2-5 to 2-8, 2-13, 2-17, 2-19, and 2-21 as the mixture of flexible epoxy resin (A) and polymer fine particles (B), and the epoxy curing agent (C-3; isophorone diamine (IPDA), manufactured by Wako Pure Chemical Industries, Ltd.) as the component (C) were weighed and thoroughly mixed, and the resultant mixture was defoamed to obtain a curable composition. A cured product was obtained under the curing conditions at 23°C for 24 hours and at 80°C for 40 hours using this composition according to the above test method, and the tensile properties (stress at 100% elongation: M100, maximum tensile stress: Tmax and elongation at maximum tensile stress: Emax) and the durometer hardness of the cured product were measured. The test results are shown in Table 5.

[Table 5]

| | Composition (parts by mass) | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | | Durometer hardness of cured product |
|---|---|---|---|---|---|---|---|---|---|---|---|---|
| | Epoxy resin (A-1) | Dispersion (M) in which polymer fine particles (B) are dispersed | | Epoxy curing agent (C-3) | | | | | M100 | Tmax | Emax | |
| | | | | IPDA | (parts by mass) | (parts by mass) | (°C) | (mmol/g) | (MPa) | (MPa) | (%) | TypeA |
| Example 28 | | 167 | (M-5) | 20.8 | 67parts | 21 parts | 63 | 0.54 | 12.0 | 15.0 | 124 | 86 |
| Example 29 | | 167 | (M-6) | 20.8 | 67parts | 21parts | 29 | 0.54 | - | 13.8 | 92 | 84 |
| Example 30 | | 167 | (M-7) | 20.8 | 67parts | 21parts | 29 | 0.00 | - | 9.7 | 92 | 78 |
| Example 31 | | 167 | (M-13) | 20.8 | 67parts | 21parts | 29 | 0.53 | - | 12.8 | 81 | 85 |
| Example 32 | 75 | 42 | (M-6) | 20.8 | 17parts | 21parts | 29 | 0.54 | 6.4 | 16.5 | 202 | 78 |
| Example 33 | 50 | 83 | (M-6) | 20.8 | 33parts | 21parts | 29 | 0.54 | 8.7 | 14.9 | 169 | 82 |
| Example 34 | 50 | 83 | (M-7) | 20.8 | 33parts | 21parts | 29 | 0.00 | 5.5 | 11.8 | 236 | 81 |
| Example 35 | 50 | 83 | (M-8) | 20.8 | 33parts | 21parts | 29 | 1.08 | 10.1 | 15.8 | 142 | 83 |
| Example 36 | 50 | 83 | (M-13) | 20.8 | 33parts | 21parts | 29 | 0.53 | 8.8 | 16.6 | 163 | 82 |
| Example 37 | 50 | 83 | (M-17) | 20.8 | 33parts | 21parts | 71 | 0.53 | 10.8 | 18.4 | 161 | 86 |
| Example 38 | 50 | 83 | (M-19) | 20.8 | 33parts | 21parts | 1 | 0.53 | 5.4 | 16.2 | 179 | 71 |
| Comparative Example 18 | 50 | 83 | (M-21) | 20.8 | 33parts | 21parts | -54 | 0.53 | 3.3 | 8.8 | 157 | 67 |
| Comparative Example 19 | 100 | | - | 20.8 | Oparts | 21parts | - | - | 2.7 | 8.9 | 199 | 65 |

According to the results of Table 5, the cured product obtained by curing the curable composition of the present invention had rubber elasticity, high elongation, and high strength (maximum tensile stress).

Regarding the dispersions (M-27 to M-30) in which the polymer fine particles obtained in Production Examples 2-27 to 2-30 were dispersed, "amount (% by mass) of polymer fine particles (B) in dispersion (M)", "particle diameter (μm) of polymer fine particles (B)", "Tg (°C) of core layer of polymer fine particles (B)", "amount (mmol/g) of epoxy group in shell layer of polymer fine particles (B)", and "viscosity (Pa·s) of dispersion (M) at 25°C" are shown in Table 6.

[Table 6]

| Dispersion(M) in which polymer fine particles (B) are dispersed in epoxy resin (A-2) | | Latex (L) containing polymer fine particles (B) | | Amount of polymer fine particles (B) of dispersion (M) | Particle diameter of polymer fine particles (B) | Tg of core layer of polymer fine particles (B) | Amount of epoxy group of shell layer of polymer fine particles (B) | Viscosity (Pa·s) of dispersion (M) |
|---|---|---|---|---|---|---|---|---|
| | | | | (% by mass) | (μm) | (°C) | (mmol/g) | <25 °C> |
| Production Example 2-27 | M-27 | Production Example 1-8 | L-8 | 40 | 0.09 | 63 | 0.54 | >200 |
| Production Example 2-28 | M-28 | Production Example 1-9 | L-9 | 40 | 0.10 | 63 | 0.53 | 54.9 |
| Production Example 2-29 | M-29 | Production Example 1-10 | L-10 | 40 | 0.09 | 63 | 0.55 | 19.7 |
| Production Example 2-30 | M-30 | Production Example 1-11 | L-11 | 40 | 0.10 | 63 | 0.54 | 22.4 |

(Examples 39 to 42 and Comparative Example 20)

According to the formulation shown in Table 7, the flexible epoxy resin (A-2; epoxy group-containing acrylic polymer, UG-4010: manufactured by Toagosei Co., Ltd.) as the component (A), the dispersions (M-27 to M-30) obtained in Production Examples 2-27 to 2-30 as the mixture of flexible epoxy resin (A) and polymer fine particles (B), and the epoxy curing agent (C-1; amino-terminated butadiene-acrylonitrile copolymer, Hypro 1300X16 ATBN: manufactured by CVC Thermoset Specialties) as the component (C) were weighed and thoroughly mixed, and the resultant mixture was defoamed to obtain curable compositions. A cured product was obtained under the curing conditions at 23°C for 48 hours and at 80°C for 5 hours using this composition according to the above test method, and the tensile properties (stress at 100% elongation: M100, maximum tensile stress: Tmax, and elongation at maximum tensile stress: Emax) and the durometer hardness of the cured product were measured. The test results are shown in Table 7.

To 100 parts by mass of the flexible epoxy resin (A-2) having an epoxy equivalent of 720 g/eq, 11.8 parts by mass of isophorone diamine were added and mixed. The resultant mixture was defoamed by centrifugation and poured into the mold so that air bubbles were not introduced. The mixture was cured at 23°C for 24 hours and further cured at 80°C for 40 hours to obtain a cured product sheet having a thickness of 6 mm. Durometer hardness of the sheet was measured at 23°C and 50% RH using a type A durometer hardness tester compliant with JIS K-6253, and the measured value was 18. The epoxy resin (A-2) used in Examples was considered to be "a flexible epoxy resin resulted in a cured product having rubber elasticity".

[Table 7]

| | Composition (parts by mass) | | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | | Durometer hardness of cured product |
|---|---|---|---|---|---|---|---|---|---|---|---|---|
| | Epoxy resin (A-2) | Dispersion (M) in which polymer fine particles (B) are dispersed | | Epoxy curing agent (C-1) | | | | | M100 | Tmax | Emax | |
| | | | | ATBN | (parts by mass) | (parts by mass) | (°C) | (mmol/g) | (MPa) | (MPa) | (%) | TypeA |
| Example 39 | | 167 | (M-27) | 117.7 | 67parts | 118parts | 63 | 0.54 | 2.9 | 4.4 | 147 | 68 |
| Example 40 | | 167 | (M-28) | 117.7 | 67parts | 118parts | 63 | 0.53 | 3.2 | 4.1 | 137 | 75 |
| Example 41 | | 167 | (M-29) | 117.7 | 67parts | 118parts | 63 | 0.55 | - | 3.4 | 87 | 72 |
| Example 42 | | 167 | (M-30) | 117.7 | 67parts | 118parts | 63 | 0.54 | - | 2.6 | 57 | 73 |
| Comparative Example 20 | 100 | | - | 117.7 | 0parts | 118parts | - | - | 0.3 | 0.4 | 145 | 35 |

According to the results of Table 7, the cured product obtained by curing the curable composition of the present invention had rubber elasticity and high strength (maximum tensile stress).

(Example 43 and Comparative Examples 21 to 23)

According to the formulation shown in Table 8, the flexible epoxy resin (A) (A-1, epoxy equivalent: 410 g/eq) or the bisphenol A epoxy resin (A-3, epoxy equivalent: 190 g/eq) as the component (A), the dispersion (M-5) obtained in Production Example 2-5 or the dispersion (M-31) obtained in Production Example 2-31 as the mixture of flexible epoxy resin (A) and polymer fine particles (B), and the epoxy curing agent (C-3; isophoronediamine (IPDA), manufactured by Wako Pure Chemical Industries) as the component (C) were respectively weighed and thoroughly mixed, and the resultant mixture was defoamed to obtain curable compositions. A cured product was obtained under the curing conditions at 23°C for 24 hours and at 80°C for 40 hours using this composition according to the above test method, and the tensile properties (stress at 100% elongation: M100, maximum tensile stress: Tmax and elongation at maximum tensile stress: Emax) and the durometer hardness of the cured product were measured. The test results are shown in Table 8.

Since the cured products of Comparative Examples 22 to 23 in Table 8 had high elastic modulus and low elongation, the tensile property of the cured products shown in Table 8 were obtained by punching through a No. 1 dumbbell mold in accordance with JIS K-7113 and subjecting to a tensile test at 23°C and a pulling rate of 10 mm/min.

[Table 8]

| | Composition (parts by mass) | | | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | | Durometer hardness of cured product |
|---|---|---|---|---|---|---|---|---|---|---|---|
| | Epoxy resin (A) or Dispersion (M) | Amount added | Epoxy curing agent (C-3) | | | | | M100 | Tmax | Emax | |
| | | | IPDA | (parts by mass) | (parts by mass) | (°C) | (mmol/g) | (MPa) | (MPa) | (%) | TypeA |
| Example 43 | Dispersion (M-5) in which polymer fine particles (B) are ; dispersed in Epoxy resin (A-1, EEW=410) | 167 | 20.8 | 67parts | 21parts | 63 | 0.54 | 3.3 | 11.5 | 110 | 89 |
| Comparative Example 21 | Epoxy resin(A-1, EEW=410) | 100 | 20.8 | 0parts | 21parts | - | - | 0.7 | 5.3 | 206 | 86 |
| Comparative Example 22 | Dispersion (M-31) in which polymer fine particles (B) are dispersed in Epoxy resin(A-3, EEW=190) | 167 | 44.8 | 67parts | 45parts | 63 | 0.54 | - | 51.0 | 2.3 | 99 |
| Comparative Example 23 | Epoxy resin(A-3, EEW=190) ; | 100 | 44.8 | 0parts | 45parts | - | - | - | 81.9 | 3.9 | 100 |

Comparative Examples 22 and 23 of Table 8 show that when the bisphenol A epoxy resin (A-3) was used, the cured products had low elongation and no rubber elasticity, and the addition of the polymer fine particles caused a decrease in the strength (maximum tensile stress) of the cured products.

On the other hand, Example 43 and Comparative Example 21 show that when the flexible epoxy resin (A-1) was used, the cured products had high elongation and rubber elasticity, and the addition of the polymer fine particles resulted in a significant increase in the strength (maximum tensile stress).

(Example 44 and Comparative Examples 24 to 28)

According to the formulation shown in Table 9, the flexible epoxy resin (A) (A-1, epoxy equivalent: 410 g/eq) or the bisphenol A epoxy resin (A-3, epoxy equivalent: 190 g/eq) as the component (A), the dispersion (M-5) obtained in Production Example 2-5 as the mixture of flexible epoxy resin (A) and polymer fine particles (B), and the epoxy curing agent (C-3; isophoronediamine (IPDA), manufactured by Wako Pure Chemical Industries) as the component (C) were respectively weighed and thoroughly mixed, and the resultant mixture was defoamed to obtain curable compositions. A cured product was obtained under the curing conditions at 80°C for 40 hours using this composition according to the above test method, and the tensile properties (maximum tensile stress: Tmax and elongation at maximum tensile stress: Emax) and the durometer hardness of the cured product were measured. The test results are shown in Table 9.

The tensile property of cured products shown in Table 9 were obtained by punching through a No. 3 dumbbell mold in accordance with JIS K-6251 and subjecting to a tensile test at 23°C and a pulling rate of 200 mm/min.

[Table 9]

| | Composition(parts by mass) | | | | Amount of Epoxy resin (A-1) | Amount of Epoxy resin (A-3) | Amount of polymer fine particles (B) per 100 parts of epoxy resin (A) | Amount of epoxy curing agent (C) per 100 parts of epoxy resin (A) | Tg of core layer of polymer fine particles (B) | Amount of epoxy group of shell layer of polymer fine particles (B) | Tensile property of cured product | | Durometer hardness of cured product |
| | Epoxy resin (A-1, EEW=410) | Epoxy resin (A-3, EEW=190) | Dispersion (M-5) in which polymer fine particles (B) are dispersed in epoxy resin (A-1) | Epoxy curing agent (C-3) | | | | | | | Tmax | Emax | |
| | | | | IPDA | (parts by mass) | (parts by mass) | (parts by mass) | (parts by mass) | (°C) | (mmol/g) | (MPa) | (%) | TypeA |
| Example 44 | 76 | - | 40 | 20.8 | 100parts | 0parts | 16parts | 21 parts | 63 | 0.54 | 9.8 | 190 | 89 |
| Comparative Example 24 | 100 | - | - | 20.8 | 100parts | 0parts | 0parts | 21 parts | - | - | 3.8 | 200 | 70 |
| Comparative Example 25 | 51 | 25 | 40 | 26.8 | 75parts | 25parts | 16parts | 27parts | 63 | 0.54 | 24.3 | 3.5 | 97 |
| Comparative Example 26 | 75 | 25 | - | 26.8 | 75parts | 25parts | 0parts | 27parts | - | - | 26.3 | 4.8 | 96 |
| Comparative Example 27 | 26 | 50 | 40 | 32.8 | 50parts | 50parts | 16parts | 33parts | 63 | 0.54 | 22.4 | 1.1 | 98 |
| Comparative Example 28 | 50 | 50 | - | 32.8 | 50parts | 50parts | 0parts | 33parts | - | - | 40.3 | 2.3 | 98 |

Comparative Examples 25 to 28 in Table 9 show that when the flexible epoxy resin (A) was used so that the type A durometer hardness was greater than 95 at 23°C, the cured products had low elongation and no rubber elasticity, and the addition of the polymer fine particles (B) resulted in a decrease in the strength (maximum tensile stress) of the cured products.

On the other hand, Example 44 and Comparative Example 24 show that when the flexible epoxy resin (A) was used so that the type A durometer hardness was 95 or less at 23°C, the cured products had high elongation and rubber elasticity, and the addition of the polymer fine particles (B) resulted in a significant increase in the strength (maximum tensile stress) of the cured products.

(Reference Example)

55 parts by mass of the bisphenol A epoxy resin (A-3, epoxy equivalent: 190 g/eq), 75 parts by mass of the rubber-modified epoxy resin (EPON Resin 58005, manufactured by Momentive Performance Materials Inc., elastomer concentration: 40 wt%, bisphenol A epoxy resin concentration: 60 wt%, epoxy equivalent: 325 to 375 g/eq), 7 parts by mass of the epoxy curing agent (C-4; dicyandiamide) as the component (C), and 1 part by mass of the epoxy curing aid (1,1-dimethyl-3-phenylurea) were weighed and thoroughly mixed, and the resultant mixture was defoamed to obtain a curable composition. This composition was cured under curing conditions at 170°C for 1 hour to obtain a cured product. The cured product was punched through a No. 1 dumbbell mold in accordance with JIS K-7113 and subjected to a tensile test at 23°C and a pulling rate of 10 mm/min. As a result, the elongation at the maximum tensile stress was as low as 2.9% and the durometer hardness was 98.

INDUSTRIAL APPLICABILITY

The curable composition of the present invention is useful as an adhesive, particularly as a rubber elastic adhesive for structural use, and can be preferably used as an adhesive between various substrates.

**Claims**

1. A curable composition comprising 100 parts by mass of a flexible epoxy resin (A), 1 to 150 parts by mass of polymer fine particles (B), and 1 to 200 parts by mass of an epoxy curing agent (C), wherein
   a cured product obtained by curing a composition containing the flexible epoxy resin (A) has a type A durometer hardness value determined as defined in the description, of 1 to 95,
   the flexible epoxy resin (A) has an epoxy equivalent of from 350 to 4000 g/eq,
   the polymer fine particles have a core-shell structure and at least two layers of a core layer and a shell layer,
   the core layer of the polymer fine particles (B) has a glass transition temperature of more than 0 °C as calculated by the following numerical formula (1),
   the polymer fine particles have a volume average particle diameter (Mv) of 10 to 2000 nm, as measured by the method given in the present description,
   a cured product obtained by curing the curable composition has a type A durometer hardness of 5 to 95 at 23 °C as measured by JIS K6253-3,

$$1/Tg = \Sigma \ (M_i/Tg_i) \quad (1)$$

   wherein $M_i$ represents a mass fraction of a monomer unit i selected from butadiene unit and a non-crosslinking monomer unit constituting the core layer of the polymer fine particles (B), and $Tg_i$ represents a glass transition temperature (K) of a homopolymer composed of the monomer unit i, where the values of $Tg_i$ are determined as described in the present description.

2. The curable composition according to claim 1, wherein the flexible epoxy resin (A) is selected from a fatty acid-modified epoxy resin, a polyol-modified epoxy resin, and an epoxy group-containing (meth)acrylic copolymer.

3. The curable composition according to claim 1 or 2, wherein an amount of a hard epoxy resin is 10 parts by mass or less relative to 100 parts by mass of the flexible epoxy resin (A).

4. The curable composition according to any one of claims 1 to 3, wherein the core layer of the polymer fine particles (B) has a glass transition temperature of 15 to 200 °C.

5. The curable composition according to any one of claims 1 to 4, wherein the core layer of the polymer fine particles (B) has the glass transition temperature of from 15 to 150 °C.

6. The curable composition according to any one of claims 1 to 5, wherein the core layer of the polymer fine particles (B) comprises a (meth)acrylate polymer.

7. The curable composition according to any one of claims 1 to 6, wherein the core layer of the polymer fine particles (B) comprises a polymer polymerized with 80 to 99 % by mass of the non-crosslinking monomer and 1 to 20 % by mass of a crosslinking monomer.

8. The curable composition according to any one of claims 1 to 7, wherein the shell layer of the polymer fine particles (B) comprises a (meth)acrylate polymer.

9. The curable composition according to any one of claims 1 to 8, wherein the shell layer of the polymer fine particles (B) has an epoxy group.

10. The curable composition according to any one of claims 1 to 9, wherein an amount of the epoxy group of the shell layer of the polymer fine particles (B) is 0.05 to 3.5 mmol/g.

11. The curable composition according to any one of claims 1 to 10, wherein the polymer fine particles (B) have the shell layer grafted on the core layer, and the shell layer is polymerized with at least a monomer having an epoxy group.

12. The curable composition according to any one of claims 1 to 11, wherein the polymer fine particles (B) are dispersed in a state of primary particles in the curable composition.

13. A cured product obtained by curing the curable composition as defined in any one of claims 1 to 12.

14. An adhesive comprising the curable composition as defined in any one of claims 1 to 12.

15. An adhesive for vehicle comprising the curable composition as defined in any one of claims 1 to 12.

16. A laminate comprising bonded substrates, comprising two substrates composed of different materials bonded with the curable composition as defined in any one of claims 1 to 12.

17. The laminate according to claim 16, which is an exterior panel.

18. The laminate according to claim 16 or 17, wherein at least one of the two substrates comprises at least one selected from a steel plate, an aluminum alloy plate, a titanium alloy plate, a magnesium alloy plate, and a plastic substrate.


**Patentansprüche**

1. Eine härtbare Zusammensetzung, umfassend 100 Massenteile eines flexiblen Epoxidharzes (A), 1 bis 150 Massenteile an Polymer-Feinteilchen (B) und 1 bis 200 Massenteile eines Epoxidhärters (C), wobei
ein gehärtetes Produkt, erhalten durch Härten einer Zusammensetzung, die das flexible Epoxidharz (A) enthält, einen Typ A Durometer-Härtewert, bestimmt wie in der Beschreibung definiert, von 1 bis 95 aufweist,
das flexible Epoxidharz (A) ein Epoxidäquivalent von 350 bis 4000 g/Äq aufweist,
die Polymer-Feinteilchen eine Kern-Hülle-Struktur und mindestens zwei Schichten einer Kernschicht und einer Hüllschicht aufweisen,
die Kernschicht der Polymer-Feinteilchen (B) eine Glasübergangstemperatur von mehr als 0 °C aufweist, wie durch die folgende numerische Formel (1) berechnet,
die Polymer-Feinteilchen ein Volumenmittel des Teilchendurchmessers (Mv) von 10 bis 2000 nm aufweisen, gemessen nach dem in der vorliegenden Beschreibung angegebenen Verfahren,
ein gehärtetes Produkt, erhalten durch Härten der härtbaren Zusammensetzung, eine Typ A Durometer-Härte von 5 bis 95 bei 23 °C aufweist, gemessen durch JIS K6253-3,

$$1/Tg = \Sigma \ (M_i/Tg_i) \quad (1)$$

wobei $M_i$ einen Massenanteil einer Monomereinheit i darstellt, ausgewählt aus einer Butadieneinheit und einer nicht-vernetzenden Monomereinheit, die die Kernschicht der feinen Polymerteilchen (B) bildet, und $Tg_i$ eine Glasübergangstemperatur (K) eines Homopolymers darstellt, das aus der Monomereinheit i zusammengesetzt ist, wobei die Werte von $Tg_i$ bestimmt werden wie in der vorliegenden Beschreibung beschrieben.

2. Die härtbare Zusammensetzung nach Anspruch 1, wobei das flexible Epoxidharz (A) ausgewählt ist aus einem Fettsäure-modifizierten Epoxidharz, einem Polyol-modifizierten Epoxidharz und einem Epoxidgruppen enthaltenden (meth)acrylischen Copolymer.

3. Die härtbare Zusammensetzung nach Anspruch 1 oder 2, wobei eine Menge an hartem Epoxidharz 10 Massenteile oder weniger, bezogen auf 100 Massenteile des flexiblen Epoxidharzes (A), beträgt.

4. Die härtbare Zusammensetzung nach einem der Ansprüche 1 bis 3, wobei die Kernschicht der Polymer-Feinteilchen (B) eine Glasübergangstemperatur von 15 bis 200 °C aufweist.

5. Die härtbare Zusammensetzung nach einem der Ansprüche 1 bis 4, wobei die Kernschicht der Polymer-Feinteilchen (B) eine Glasübergangstemperatur von 15 bis 150 °C aufweist.

6. Die härtbare Zusammensetzung nach einem der Ansprüche 1 bis 5, wobei die Kernschicht der Polymer-Feinteilchen (B) ein (Meth)acrylatpolymer umfasst.

7. Die härtbare Zusammensetzung nach einem der Ansprüche 1 bis 6, wobei die Kernschicht der Polymer-Feinteilchen (B) ein Polymer umfasst, das mit 80 bis 99 Massen-% des nicht-vernetzenden Monomers und 1 bis 20 Massen-% eines vernetzenden Monomers polymerisiert ist.

8. Die härtbare Zusammensetzung nach einem der Ansprüche 1 bis 7, wobei die Hüllschicht der Polymer-Feinteilchen (B) ein (Meth)acrylatpolymer umfasst.

9. Die härtbare Zusammensetzung nach einem der Ansprüche 1 bis 8, wobei die Hüllschicht der Polymer-Feinteilchen (B) eine Epoxidgruppe aufweist.

10. Die härtbare Zusammensetzung nach einem der Ansprüche 1 bis 9, wobei eine Menge der Epoxidgruppe der Hüllschicht der Polymer-Feinteilchen (B) 0,05 bis 3,5 mmol/g beträgt.

11. Die härtbare Zusammensetzung nach einem der Ansprüche 1 bis 10, wobei bei den Polymer-Feinteilchen (B) die Hüllschicht auf die Kernschicht aufgepfropft ist und die Hüllschicht mit mindestens einem Monomer mit einer Epoxidgruppe polymerisiert ist.

12. Die härtbare Zusammensetzung nach einem der Ansprüche 1 bis 11, wobei die Polymer-Feinteilchen (B) in einem Zustand von Primärteilchen in der härtbaren Zusammensetzung dispergiert sind.

13. Ein gehärtetes Produkt, erhalten durch Härten der härtbaren Zusammensetzung wie in einem der Ansprüche 1 bis 12 definiert.

14. Ein Klebstoff, umfassend die härtbare Zusammensetzung nach einem der Ansprüche 1 bis 12.

15. Ein Klebstoff für ein Fahrzeug, umfassend die härtbare Zusammensetzung wie in einem der Ansprüche 1 bis 12 definiert.

16. Ein Laminat, umfassend verbundene Substrate, das zwei Substrate umfasst, die aus unterschiedlichen Materialien bestehen, die mit der härtbaren Zusammensetzung, wie in einem der Ansprüche 1 bis 12 definiert, verbunden sind.

17. Das Laminat nach Anspruch 16, das ein Außenpaneel ist.

**18.** Das Laminat nach Anspruch 16 oder 17, wobei mindestens eines der zwei Substrate mindestens eines umfasst, ausgewählt aus einer Stahlplatte, einer Aluminiumlegierungsplatte, einer Titanlegierungsplatte, einer Magnesiumlegierungsplatte und einem Kunststoffsubstrat.

**Revendications**

**1.** Composition durcissable comprenant 100 parties en masse d'une résine époxy flexible (A), 1 à 150 parties en masse de fines particules de polymère (B), et 1 à 200 parties en masse d'un agent durcisseur époxy (C), dans laquelle un produit durci obtenu par durcissement d'une composition contenant la résine époxy flexible (A) a une valeur de dureté au duromètre de type A, déterminée comme défini dans la description, de 1 à 95, la résine époxy flexible (A) a un équivalent époxy de 350 à 4000 g/éq, les fines particules de polymère ont une structure cœur-enveloppe et au moins deux couches d'une couche de cœur et d'une couche d'enveloppe, la couche de cœur des fines particules de polymère (B) a une température de transition vitreuse supérieure à 0°C, telle que calculée par la formule numérique (1) qui suit, les fines particules de polymère ont une granulométrie moyenne en volume (Mv) de 10 à 2000 nm, telle que mesurée par la méthode indiquée dans la présente description, un produit durci obtenu par durcissement de la composition durcissable a une dureté au duromètre de type A de 5 à 95 à 23°C, telle que mesurée conformément à la norme JIS K6253-3,

$$1/Tg = \Sigma \; (M_i/Tg_i) \qquad (1)$$

dans laquelle $M_i$ représente la fraction massique d'un motif monomère i sélectionné parmi un motif butadiène et un motif monomère non réticulant constituant la couche de cœur des fines particules de polymère (B), et $Tg_i$ représente la température de transition vitreuse (K) d'un homopolymère composé du motif monomère i, où les valeurs de $Tg_i$ sont déterminées comme décrit dans la présente description.

**2.** Composition durcissable selon la revendication 1, dans laquelle la résine époxy flexible (A) est sélectionnée parmi une résine époxy modifiée par un acide gras, une résine époxy modifiée par un polyol, et un copolymère (méth)acrylique contenant un groupe époxy.

**3.** Composition durcissable selon la revendication 1 ou 2, dans laquelle la quantité de résine époxy dure est de 10 parties en masse ou moins pour 100 parties en masse de la résine époxy flexible (A).

**4.** Composition durcissable selon l'une quelconque des revendications 1 à 3, dans laquelle la couche de cœur des fines particules de polymère (B) a une température de transition vitreuse de 15 à 200°C.

**5.** Composition durcissable selon l'une quelconque des revendications 1 à 4, dans laquelle la couche de cœur des fines particules de polymère (B) a une température de transition vitreuse de 15 à 150°C.

**6.** Composition durcissable selon l'une quelconque des revendications 1 à 5, dans laquelle la couche de cœur des fines particules de polymère (B) comprend un polymère de (méth)acrylate.

**7.** Composition durcissable selon l'une quelconque des revendications 1 à 6, dans laquelle la couche de cœur des fines particules de polymère (B) comprend un polymère polymérisé avec 80 à 99 % en masse du monomère non réticulant et 1 à 20 % en masse d'un monomère réticulant.

**8.** Composition durcissable selon l'une quelconque des revendications 1 à 7, dans laquelle la couche d'enveloppe des fines particules de polymère (B) comprend un polymère de (méth)acrylate.

**9.** Composition durcissable selon l'une quelconque des revendications 1 à 8, dans laquelle la couche d'enveloppe des fines particules de polymère (B) a un groupe époxy.

**10.** Composition durcissable selon l'une quelconque des revendications 1 à 9, dans laquelle la quantité du groupe époxy de la couche d'enveloppe des fines particules de polymère (B) est de 0,05 à 3,5 mmol/g.

**11.** Composition durcissable selon l'une quelconque des revendications 1 à 10, dans laquelle les fines particules de polymère (B) ont la couche d'enveloppe greffée sur la couche de cœur, et la couche d'enveloppe est polymérisée avec au moins un monomère ayant un groupe époxy.

**12.** Composition durcissable selon l'une quelconque des revendications 1 à 11, dans laquelle les fines particules de polymère (B) sont dispersées dans un état de particules primaires dans la composition durcissable.

**13.** Produit durci obtenu par durcissement de la composition durcissable telle que définie dans l'une quelconque des revendications 1 à 12.

**14.** Adhésif comprenant la composition durcissable telle que définie dans l'une quelconque des revendications 1 à 12.

**15.** Adhésif pour un véhicule comprenant la composition durcissable telle que définie dans l'une quelconque des revendications 1 à 12.

**16.** Stratifié comprenant des substrats collés, comprenant deux substrats composés de matériaux différents collés avec la composition durcissable telle que définie dans l'une quelconque des revendications 1 à 12.

**17.** Stratifié selon la revendication 16, qui est un panneau extérieur.

**18.** Stratifié selon la revendication 16 ou 17, dans lequel au moins l'un des deux substrats comprend au moins l'un sélectionné parmi une tôle en acier, une tôle en alliage d'aluminium, une tôle en alliage de titane, une tôle en alliage de magnésium, et un substrat en matière plastique.

**EP 3 444 301 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2163579 B1
- JP 2005272647 A
- JP 2009108278 A
- JP 2014083904 A
- WO 2009034966 A
- JP 2014141604 A
- US 5084532 A
- US 6015865 A
- WO 2005028546 A
- JP 2016079836 A

**Non-patent literature cited in the description**

- POLYMER HANDBOOK